# EUROPÄISCHE PATENTSCHRIFT

(11) **EP 2 395 896 B1**
(45) Veröffentlichungstag und Bekanntmachung des Hinweises auf die Patenterteilung: **08.01.2020**
(21) Anmeldenummer: 10701880.6
(22) Anmeldetag: 02.02.2010
(51) Int. Cl.: A47L 15/42, F16K 15/03

(54) **HAUSHALTSGESCHIRRSPÜLMASCHINE UND VERFAHREN ZUM VERSORGEN EINER ODER MEHRERER SPÜLFLÜSSIGKEITS-SPRÜHEINRICHTUNG**
HOUSEHOLD DISHWASHING MACHINE AND METHOD FOR SUPPLYING ONE OR A PLURALITY OF RINSING FLUID SPRAYING ARRANGEMENTS
MACHINE À LAVER LA VAISSELLE DOMESTIQUE ET PROCÉDÉ D'ALIMENTATION D'UN OU PLUSIEURS DISPOSITIFS DE PULVÉRISATION DE LIQUIDE DE LAVAGE

(30) Priorität: 16.02.2009 DE 102009000878
(43) Veröffentlichungstag der Anmeldung: 21.12.2011
(73) Patentinhaber: BSH Hausgeräte GmbH, 81739 München (DE)
(72) Erfinder: ALMENDROS CARMONA, Ismael Jesus, E-31012 Pamplona (ES); ASTIZ MONTOYA, Cesar, E-31200 Noveleta (Estella) (ES); JERG, Helmut, 89537 Giengen (DE); LIZOAIN MENDOZA, Roberto, E-31430 AOIZ (Navarra) (ES); LUTZ, Stephan, 86637 Sontheim (DE)
(74) Vertreter: Erhard, Stefan
(86) Internationale Anmeldenummer: PCT/EP2010/051218
(87) Internationale Veröffentlichungsnummer: WO 2010/091974

(56) Entgegenhaltungen:
- EP-A2- 0 786 230
- WO-A1-99/27836
- DE-A1- 19 626 823
- FR-A1- 2 572 922
- US-A- 3 814 124

## Beschreibung

Die vorliegende Erfindung betrifft eine Haushaltsgeschirrspülmaschine mit einem Spülbehälter, einer oder mehreren im Spülbehälter angeordneten Spülflüssigkeits-Sprüheinrichtungen, sowie einer Umwälzpumpe zum Fördern von Spülflüssigkeit, und mit einer Ventilvorrichtung zum Öffnen und Schließen eines Zuleitungsabschnitts zu einer Spülflüssigkeits-Sprüheinrichtung oder von mehreren, insbesondere zwei Zuleitungsabschnitten zu den mehreren, insbesondere zwei Spülflüssigkeits-Sprüheinrichtungen.

Eine derartige Haushaltsgeschirrspülmaschine ist beispielsweise aus der EP 0 786 230 A2 bekannt. Diese Geschirrspülmaschine weist insgesamt drei Sprüheinrichtungen auf, wobei die Versorgung der Sprüheinrichtungen mit Spülflüssigkeit mittels einer Ventilvorrichtung steuerbar ist. Die Ventilvorrichtung weist verschiebbare oder klappbare Verschlusselemente auf, deren Funktion durch strömende Spülflüssigkeit beeinflusst wird.

Eine weitere Haushaltsgeschirrspülmaschine ist z.B. aus der WO 2008/125482 A2 bekannt. Darin ist eine Umsteuereinrichtung eines Geschirrspülers beschrieben, die ein Verschlusselement aufweist. Die Umsteuereinrichtung hat die Funktion, eine Spülflüssigkeit auf verschiedene Sprühsysteme bzw. Sprühebenen innerhalb eines Spülbehälters des Geschirrspülers zu verteilen. Für den Transport der Spülflüssigkeit sorgt eine Umwälzpumpe. Eine Antriebseinrichtung, die von einer Steuerungseinrichtung angesteuert wird, verändert die Lage des Verschlusselements. Im Inneren der Umsteuereinrichtung, die auch als Wasserweiche bezeichnet wird, ist ein scheibenförmiges Verschlusselement angeordnet, das über einen Flansch mit einer Welle verbunden ist. Das Verschlusselement ist drehbar vor Ausgangsstutzen in der Wasserweiche gelagert, so dass Öffnungen wahlweise oder gemeinsam mit einem Stutzen fluchten oder sie verschließen. Die Welle ist flüssigkeitsdicht durch ein Gehäuse der Wasserweiche geführt. Außerhalb des Gehäuses ist auf der Welle ein Zahnrad befestigt, das als Verbindungsglied zu einem Elektromotor als Antrieb des Verschlusselements dient.

Eine Aufgabe der Erfindung ist es, eine Haushaltsgeschirrspülmaschine mit einer verbesserten Ventilvorrichtung zum Öffnen und Schließen eines Zuleitungsabschnitts zu einer Spülflüssigkeits-Sprüheinrichtung bzw. von Zuleitungsabschnitten zu mehreren Spülflüssigkeits-Sprüheinrichtungen zu schaffen. Eine weitere Aufgabe der Erfindung besteht insbesondere auch darin, ein einfaches Verfahren, insbesondere zum intermittierenden Versorgen, von ein oder mehreren Spülflüssigkeits-Sprüheinrichtungen, insbesondere wahlweise mindestens einer ersten und einer zweiten Spülflüssigkeits-Sprüheinrichtung, in Haushaltsgeschirrspülmaschinen aufzuzeigen.

Die Aufgabe wird gemäß einer Haushaltsgeschirrspülmaschine der eingangs genannten Art dadurch gelöst, dass die Ventilvorrichtung eine Verschlussklappe aufweist, die aufgrund einer mit einem Spülflüssigkeitsdruckunterschied einhergehenden hydraulischen Stellkraft zwischen einer ersten Stellung, in welcher der Zuleitungsabschnitt durch die Verschlussklappe verschlossen ist und einer zweiten Stellung, in welcher der Zuleitungsabschnitt von der Verschlussklappe freigegeben ist, schwenkbar angeordnet ist.

Dadurch ist ein vereinfachtes und dennoch zuverlässiges Auf- und Zumachen des jeweiligen Zuleitungsabschnitts bereitgestellt.

Indem die Ventilvorrichtung eine Verschlussklappe aufweist, die aufgrund einer in Abhängigkeit eines Spülflüssigkeitsdruckunterschieds erzeugten hydraulischen Kraft zwischen einer ersten Stellung, in welcher der Zuleitungsabschnitt durch die Verschlussklappe verschlossen ist und einer zweiten Stellung, in welcher der Zuleitungsabschnitt von der Verschlussklappe freigegeben ist, schwenkbar angeordnet ist, kann insbesondere auf eine Schwenkbetätigung der Verschlussklappe durch zusätzliche mechanische Stellmittel verzichtet werden. Dies hat z.B. den Vorteil, dass die Haushaltsgeschirrspülmaschine weniger Bauteile aufweist und folglich kostengünstiger hergestellt werden kann. Auch erhöht sich durch die geringere Teilezahl die Betriebszuverlässigkeit der Haushaltsgeschirrspülmaschine. Wegen des Wegfalls von mechanischen Stellmitteln, die im Allgemeinen von außerhalb eines Gehäuses der Ventilvorrichtung auf die bekannten Drehscheiben einwirken, wird in vorteilhafter Weise keine mechanische Durchführung von außerhalb nach innerhalb des Gehäuses der Ventilvorrichtung benötigt, so dass aufwändige Maßnahmen zum Abdichten von Durchführungen für die mechanischen Stellmittel wegfallen. Dies erhöht zusätzlich die Betriebszuverlässigkeit der Ventilvorrichtung und der gesamten Haushaltsgeschirrspülmaschine und reduziert auch deutlich die diesbezüglichen Herstellkosten.

Die schwenkbare Verschlussklappe weist ein erstes Ende, insbesondere einen Klappenfuß, das oder der bezüglich des Zuleitungsabschnitts gelagert ist, und ein zweites, freies Ende auf, das zwischen der ersten Stellung und der zweiten Stellung hin und her verschwenkbar ist. Indem der bewegliche Teil der Ventilvorrichtung als Verschlussklappe oder schwenkarmartige Abdichtung ausgebildet ist, wird eine sehr zuverlässige arbeitende und gut dichtende Verschlussart geschaffen. Die Verschlussklappe kann sich vorzugsweise in einem Zuleitungsabschnitt befinden, der in einem Spülflüssigkeitsförderkanal zwischen dem Umwälzpumpenausgang der Umwälzpumpe und einer Spülflüssigkeits-Sprüheinrichtung angeordnet ist. Durch eine einseitig schwenkbare Lagerung der Verschlussklappe mit ihrem erstem Ende, d.h. ihrem festen Ende an dem bzw. bezüglich des zu verschließenden Zuleitungsabschnitts ergibt sich ein zweites, insbesondere freies Ende der Verschlussklappe, das in einfacher Weise und sehr schnell aus einer ersten Stellung der Verschlussklappe in eine zweite Stellung der Verschlussklappe geschwenkt werden kann.

Die Verschlussklappe kann insbesondere aus einem flexiblen Material, insbesondere Kunststoffmaterial wie z.B. einem Silikonwerkstoff hergestellt und das erste Ende im Zuleitungsabschnitt befestigt sein. Es ist zwar ggf. auch möglich, die Verschlussklappe starr oder formsteif auszubilden und die Schwenkbarkeit zwischen der ersten und zweiten Stellung alleine durch ein Schwenklager an der Verbindungsstelle von Schwenkklappe und Zuleitungsabschnitt zu realisieren. Vorteilhafter ist es jedoch, wenn die Verschlussklappe eine gewissen Flexibilität bzw. Materialelastizität aufweist, also bspw. aus flexiblem Material hergestellt ist, so dass die Schwenkbeweglichkeit der Verschlussklappe zumindest teilweise oder aber auch vollständig durch die innere Flexibilität bzw. Federelastizität der Verschlussklappe erreicht werden kann. So kann einerseits die Verschlussklappe aus flexiblem Material mittels eines Schwenklagers in dem Zuleitungsabschnitt gelagert sein. Andererseits kann die Verschlussklappe aus flexiblem Material mit einem ihrer Enden an dem Zuleitungsabschnitt, vorzugsweise starr, befestigt sein und die Schwenkbeweglichkeit, insbesondere bereits alleine, durch die Biegefähigkeit der Verschlussklappe selbst erreicht werden.

Nach einer zweckmäßigen Weiterbildung der Erfindung kann es zweckmäßig sein, wenn die Verschlussklappe lamellenförmig, insbesondere blättchen- oder scheibchenförmig, ausgebildet ist. Sie weist vorzugsweise eine im Wesentlichen dünne Plättchen-Geometrieform auf.

Der Zuleitungsabschnitt kann insbesondere ein Teil des Kanals oder Schlauches sein, welcher den Umwälzpumpenausgang mit einer Spülflüssigkeits-Sprüheinrichtung der Haushaltsgeschirrspülmaschine verbindet. Der Zuleitungsabschnitt kann insoweit auch in der Nähe oder unmittelbar am Ausgang der Umwälzpumpe angeordnet sein. Insbesondere kann der Zuleitungsabschnitt ein Teil des Gehäuses der Umwälzpumpe bzw. der Ventilvorrichtung sein. Mit anderen Worten kann das Umwälzpumpengehäuse und das Gehäuse der Ventilvorrichtung dasselbe Bauteil bilden. In all diesen Varianten kann das erste Ende der Verschlussklappe zwischen einem Gehäuseabschnitt der Ventilvorrichtung und einem in den Gehäuseabschnitt eingesetzten Ventilsitz-Einsatz klemmend befestigt sein.

Der Verschlussklappe ist zum weitgehend flüssigkeits-abdichtenden Verschließen des Zuleitungsabschnitts insbesondere ein Ventilsitz zugeordnet. Der Ventilsitz kann bspw. aus fertigungstechnischen Erwägungen heraus an einem separaten Bauteil, d.h. an einem Ventilsitz-Einsatz vorgesehen sein. In diesem Falle ist es vorteilhaft, das erste Ende der Verschlussklappe zwischen einem Gehäuseabschnitt der Ventilvorrichtung und einem in den Gehäuseabschnitt eingesetzten Ventilsitz-Einsatz klemmend zu befestigen. So können aufwendige weitere Maßnahmen zur Lagerung oder Befestigung des ersten bzw. festen Endes der Verschlussklappe bezüglich des Zuleitungsabschnitts entfallen. Gegebenenfalls kann es auch zweckmäßig sein, wenn der Ventilsitz-Einsatz an der Innenwandung des Zuleitungsabschnitts angeformt ist.

Eine andere Art, die Schwenkbeweglichkeit der Verschlussklappe zu realisieren, kann es insbesondere sein, die Schwenklagerfunktion in das Bauteil der Verschlussklappe zu integrieren, bzw. das Schwenklager durch die Gestaltung der Verschlussklappe zu schaffen. Dazu kann das erste Ende mit dem zweiten, freien Ende der Verschlussklappe über einen filmscharnierartigen Materialverdünnungsabschnitt der Verschlussklappe verbunden sein. Mit anderen Worten wird die Dicke der Verschlussklappe an einer diskreten Stelle derart reduziert, dass dieser verdünnte Abschnitt eine größere Flexibilität als die anderen Bereiche der Verschlussklappe aufweist. So wird an einer fest definierten Stelle der Verschlussklappe die Schwenkbeweglichkeit aufgeprägt. Dazu kann es insbesondere zweckmäßig sein, für die Verschlussklappe ein flexibles bzw. federelastisches Material, insbesondere Kunststoffmaterial, zu wählen.

Nach einer besonders zweckmäßigen Ausführungsvariante der Erfindung kann das erste Ende der Verschlussklappe in vorteilhafter Weise zwischen einem ersten Zuleitungsabschnitt zu einer ersten Spülflüssigkeits-Sprüheinrichtung und einem zweiten Zuleitungsabschnitt zu einer zweiten Spülflüssigkeits-Sprüheinrichtung befestigt sein, so dass in der ersten Stellung der erste Zuleitungsabschnitt von der Verschlussklappe verschlossen und der zweite Zuleitungsabschnitt freigegeben ist, und in der zweiten Stellung der erste Zuleitungsabschnitt von der Verschlussklappe freigegeben und der zweite Zuleitungsabschnitt verschlossen ist. Dabei können die beiden Y-Zuleitungsabschnitte insbesondere eine Y-Verzweigung bilden, d.h. eine gemeinsame Zuleitung zweigt sich in zwei separate Zuleitungsabschnitte als Gabeläste auf.

Die erfindungsgemäße Verschlussklappe kann aber bereits auch in einer zweckmäßigen Ausführungsform realisiert sein, in der nur ein einziger Zuleitungsabschnitt zu einer einzigen Spülflüssigkeits-Sprüheinrichtung oder mehreren Spülflüssigkeits-Sprüheinrichtungen lediglich intermittierend betrieben wird, also zeitweilig aussetzend, bzw. wiederkehrend oder mit Unterbrechungen zum Durchströmen mit Spülflüssigkeit geöffnet oder geschlossen wird. Dies bewirkt bspw. eine pulsierende Beaufschlagung der jeweiligen Spülflüssigkeits-Sprüheinrichtung mit Spülflüssigkeit. Die erfindungsgemäße Verschlussklappe kann aber auch in Ausführungsformen realisiert sein, die zwei oder mehrere Zuleitungsabschnitte zu einen, zwei oder mehreren Spülflüssigkeits-Sprüheinrichtungen aufweisen. Üblicherweise verfügt eine Haushaltsgeschirrspülmaschine über zwei Spülflüssigkeits-Sprüheinrichtungen, d.h. eine obere Spülflüssigkeits-Sprüheinrichtung und eine untere Spülflüssigkeits-Sprüheinrichtung. Es können somit beispielsweise auch zwei Verschlussklappen vorgesehen sein, wobei die eine Verschlussklappe lediglich einen ersten von zwei Zuleitungsabschnitten öffnet und schließt und die zweite Verschlussklappe den zweiten der beiden Zuleitungsabschnitte öffnet und schließt.

In einer besonderen Ausführungsform der Erfindung ist es vorgesehen, dass eine einzige Verschlussklappe zwei Zuleitungsabschnitten gemeinsam zugeordnet ist und zwar derart, dass wechselweise entweder der erste der beiden Zuleitungsabschnitte durch die Verschlussklappe verschlossen und der zweite der beiden Zuleitungsabschnitte geöffnet ist, oder der erste der beiden Zuleitungsabschnitte durch die Verschlussklappe geöffnet und der zweite der beiden Zuleitungsabschnitte verschlossen ist. Insbesondere können die beiden Zuleitungsabschnitte als Y-Verzweigung ausgebildet sein, d.h. es ist ein gemeinsamer Kanal- bzw. Leitungsabschnitts vorgesehen, der sich in zwei verschiedene Leitungsäste aufzweigt, die vorzugsweise in zwei verschiedene Richtungen zeigen. Die einzelne, zwei Zuleitungsabschnitten gemeinsam, d.h. zugleich zugeordnete Verschlussklappe funktioniert also wie eine Weiche, die von der Umwälzpumpe kommende Spülflüssigkeit, insbesondere zeitlich intermittierend, also wechselnd, entweder dem einen Zuleitungsabschnitt oder dem anderen Zuleitungsabschnitt zu der einen oder der anderen Spülflüssigkeits-Sprüheinrichtung zuweist.

Dabei können der erste Zuleitungsabschnitt und der zweite Zuleitungsabschnitt insbesondere in einem spitzen Winkel zueinander ausgerichtet angeordnet sein. Dies gewährleistet, dass der Flüssigkeitsdruck die Verschlussklappe einerseits in Richtung des ersten Zuleitungsabschnitts und andererseits in Richtung des zweiten Zuleitungsabschnitts dichtend schließen, d.h. vorzugsweise gegen den zugeordneten Ventilsitz drücken kann. Soll bevorzugt lediglich einer der beiden Zuleitungsabschnitte durch den Flüssigkeitsdruck verschließbar sein, so kann dieser Zuleitungsabschnitt in einer kleineren Winkelabweichung von der Strömungskanalrichtung, die von der Umwälzpumpe zu der Ventilvorrichtung geführt ist, ausgerichtet angeordnet sein, als der andere Zuleitungsabschnitt, dem eine größere Winkelabweichung von der Strömungskanalrichtung zugeordnet ist.

Um die Dichtwirkung zu erhöhen oder besonders zuverlässig sicherzustellen, kann in vorteilhafter Weise die Verschlussklappe zur Erzeugung einer auf die Verschlussklappe zusätzlich wirkenden Kraft in Abhängigkeit eines von außerhalb der Ventilvorrichtung erzeugten Magnetfeldes ein ferromagnetisches Element oder einen Permanentmagneten aufweisen. Dies hat den weiteren Vorteil, dass auch bei sehr geringem Flüssigkeitsdruck eine ausreichend hohe Kraft auf die Verschlussklappe ausgeübt werden kann, um die Verschlussklappe in ihrer flüssigkeitsdicht schließenden Stellung am Ventilsitz zu halten. Das Besondere liegt hierbei darin, dass von außerhalb des Gehäuses der Ventilvorrichtung eine Kraft induziert wird, welche im Inneren des Gehäuses auf die Verschlussklappe wirkt. Dies hat den besonderen Vorteil, dass die Verschlussklappe von außen beeinflusst werden kann, ohne bspw. eine mechanische Durchführung in das Gehäuse einbringen zu müssen. Besondere Dichtungsmaßnahmen entfallen.

In vorteilhafter Weise kann das freie Ende der Verschlussklappe das ferromagnetische Element oder den Permanentmagneten aufweisen. Für eine magnetisch anziehende Wirkung kann es ausreichend sein, wenn die Verschlussklappe ein beliebiges ferromagnetische Element aufweist, das bspw. ein auf magnetische Felder wirkendes Eisen- bzw. Metallstück sein kann. Vorzugsweise kann ein Permanentmagnet verwendet werden, der bezüglich des von außen einwirkenden magnetischen Feldes derart ausgerichtet ist, so dass sich eine anziehende Wirkung einstellt.

Das von außen einwirkende magnetische Feld kann insbesondere von einem außerhalb eines Gehäuses der Ventilvorrichtung angeordneten Stellglied kommen, das einen dem ferromagnetischen Element zugewandten Magneten beliebiger magnetischer Polung oder einen dem Permanentmagneten in einer ersten Position des Stellgliedes zugewandten Magneten unterschiedlicher Polung aufweist, zum spülflüssigkeits-abdichtenden Halten der Verschlussklappe in ihrer zweiten Stellung. So kann durch mechanisches Verstellen des Stellglieds lediglich außerhalb des Gehäuses der Ventilvorrichtung die innere Verschlussklappe beeinflusst werden. Das Halten der Verschlussklappe in ihrer zweiten Stellung kann dabei vorzugsweise einem Geschlossenhalten des zugeordneten Zuleitungsabschnitts entsprechen, so dass keine Spülflüssigkeit zu der zugeordneten Spülflüssigkeits-Sprüheinrichtung gelangt.

Das außerhalb des Gehäuses der Ventilvorrichtung angeordnete Stellglied kann nach einer zweckmäßigen Variante einen dem Permanentmagneten in einer zweiten Position des Stellgliedes zugewandten Magneten gleicher Polung aufweisen, zum Erzeugung einer Öffnungskraft zum Wegbewegen der Verschlussklappe aus ihrer zweiten spülflüssigkeits-abdichtenden Stellung, um einen Spülflüssigkeitsdruckunterschied zu erzeugen, der die Kraft zum Schwenken der Verschlussklappe in die erste Stellung bewirkt. Das Schwenken der Verschlussklappe in ihre erste Stellung entspricht dabei einem Freigeben des zugeordneten Zuleitungsabschnitts, so dass Spülflüssigkeit zu der zugeordneten Spülflüssigkeits-Sprüheinrichtung gelangen kann. Die diesbezügliche Wirkung beruht auf einer abstoßenden Kraft, die zwischen zwei gegenüberliegend angeordneten Magneten induziert wird, wenn gegensätzliche Pole der Magneten aufeinander zugewandt orientiert ausgerichtet sind. Statt Permanentmagneten können alternativ auch elektromagnetisch erzeugte Magnetfelder genutzt werden.

Das Stellglied kann vorzugsweise einen von einem Antrieb zu betätigenden längsverstellbaren Schieber aufweisen. Das Stellglied kann vorzugsweise nicht manuell, sondern automatisch verstellt werden. Dazu kann insbesondere ein Antrieb verwendet werden, der einen Schieber bewegt, der das Stellglied bildet, welches den Magneten trägt. Der Antrieb kann bspw. ein mittels einer elektromagnetischen Spule aktivierbarer Hubmagnet sein. Der Antrieb kann jedoch ggf. auch ein Elektromotor sein, dessen Antriebswelle mit einer Hubspindel verbunden ist, die eine Spindelmutter bzw. einen Gleitstein trägt, welcher mit dem Stellglied bzw. dem Schieber verbunden ist. So kann die innerhalb des Gehäuses angeordnete Verschlussklappe von außerhalb des Gehäuses mit elektrischen Mitteln angesteuert werden, ohne elektrische oder mechanische Mittel durch das Gehäuse hindurchführen zu müssen.

Die Ventilvorrichtung kann nach einer vorteilhaften Ausführungsvariante in ein Pumpengehäuse der Umwälzpumpe integriert sein oder das Gehäuse der Ventilvorrichtung an das Pumpengehäuse der Umwälzpumpe angeflanscht sein. Auch wenn die Ventilvorrichtung prinzipiell an einem anderen Ort als die Umwälzpumpe in der Haushaltsgeschirrspülmaschine angeordnet sein kann, ist es insbesondere vorteilhaft, die Ventilvorrichtung und die Umwälzpumpe in einer Baugruppe zu vereinigen. So kann in einer zweckmäßigen Variante die Ventilvorrichtung in einem separaten Gehäuse untergebracht und an das Pumpengehäuse der Umwälzpumpe angeflanscht, d.h. durch Befestigungsmittel mit dem Pumpengehäuse verbunden sein. In einer anderen Variante können die Ventilvorrichtung und die Umwälzpumpe in einem gemeinsamen Gehäuse untergebracht sein.

Die Erfindung betrifft auch ein Verfahren zum Öffnen und Schließen von ein oder mehreren Zuleitungsabschnitten gemäß des unabhängigen Anspruchs 19.

Im folgenden wird nun ein vorteilhaftes Verfahren zum intermittierenden Versorgen wahlweise mindestens einer ersten und optional einer zweiten Spülflüssigkeits-Sprüheinrichtung, die in einem Spülbehälter einer Haushaltsgeschirrspülmaschine angeordnet sind, um eine von einer Umwälzpumpe durch eine Ventilvorrichtung geförderte Spülflüssigkeit auszusprühen, beschrieben. Das vorteilhafte Verfahren weist insbesondere die folgenden Verfahrenschritte auf:
- Erzeugen eines elektromagnetischen Feldes außerhalb eines Gehäuses der Ventilvorrichtung, um innerhalb des Gehäuses der Ventilvorrichtung eine Öffnungskraft zu induzieren, die eine innerhalb des Gehäuses schwenkbar angeordnete Verschlussklappe aus einer zweiten spülflüssigkeits-abdichtenden Stellung weg bewegt,
- Erhöhen der Umwälzpumpenleistung zum Bewirken einer durch Spülflüssigkeitsdruckunterschied erzeugten Kraft auf die Verschlussklappe zum Bewegen der Verschlussklappe in eine erste spülflüssigkeits-abdichtende Stellung.

Bei dieser zweckmäßigen Art des Verfahrens kann das Wegbewegen der Verschlussklappe aus ihrer zweiten spülflüssigkeits-abdichtenden Stellung an einem zweiten Zuleitungsabschnitt der zweiten Spülflüssigkeits-Sprüheinrichtung durch eine abstoßende elektromagnetische Wirkung zwischen dem außerhalb des Gehäuses der Ventilvorrichtung erzeugen elektromagnetischen Feldes und einem mit der Verschlussklappe verbundenen Permanentmagneten erzielt werden.

Alle Verfahrensvarianten können insbesondere mit den folgenden zusätzlichen Schritten einzeln oder in Kombination ergänzt werden:
- Reduzieren der Umwälzpumpenleistung zur Verringern der durch Spülflüssigkeitsdruckunterschied erzeugten Kraft auf die Verschlussklappe zum Lösen der Verschlussklappe von ihrer ersten spülflüssigkeits-abdichtenden Stellung,
- Erzeugen eines elektromagnetischen Feldes außerhalb des Gehäuses der Ventilvorrichtung, um innerhalb des Gehäuses der Ventilvorrichtung eine Schließkraft zu induzieren, welche die innerhalb des Gehäuses schwenkbar angeordnete Verschlussklappe in die zweite spülflüssigkeits-abdichtende Stellung zu bewegt.

Bei dieser vorteilhaften Art des Verfahrens kann das Zubewegen der Verschlussklappe in ihre zweite spülflüssigkeits-abdichtenden Stellung an einem zweiten Zuleitungsabschnitt der zweiten Spülflüssigkeits-Sprüheinrichtung durch eine anziehende elektromagnetische Wirkung zwischen dem außerhalb des Gehäuses der Ventilvorrichtung erzeugen elektromagnetischen Feldes und einem mit der Verschlussklappe verbundenen Permanentmagneten oder ein ferromagnetischen Elements erzielt werden.

Die verschiedenen vorteilhaften Verfahrensvarianten können insbesondere dadurch weiter ergänzt werden, dass das außerhalb des Gehäuses der Ventilvorrichtung erzeugte elektromagnetische Feld durch einen Permanentmagneten erzeugt wird, der zur Steuerung der Wirkung auf den innerhalb des Gehäuses der Ventilvorrichtung mit der Verschlussklappe verbundenen Permanentmagneten oder das ferromagnetische Element örtlich zu verstellen ist.

Eine bevorzugte Ausführungsvariante der Erfindung sieht eine Verwendung eines Zusatzteils (d.h. Ventilvorrichtung) mit Klappe (d.h. Verschlussklappe) vor, das in den Pumpenausgang (abströmseitig der Umwälzpumpe) eingesetzt wird. Zudem ist am Pumpengehäuse insbesondere ein zweiter Abgang angespritzt, der über eine externe Verschlauchung oder Verrohrung als Zuführung zum oberen Sprüharm (d.h. Spülflüssigkeits-Sprüheinrichtung) dient. In der Klappe ist vorzugsweise ein Magnet befestigt oder mit eingespritzt. Die Klappe selbst kann insbesondere aus Kunststoff wie auch aus Silikon, Gummi oder TPE (thermoplastisches Elastomer) gefertigt sein. Auf die Pumpe außen wird vorzugsweise ein Aktor, d.h. ein Stellmittel (bspw. eine Magnetspule oder anderer Aktuator) aufgesetzt, welcher einen Magnet bewegt. Dieser äußere Magnet ist insbesondere derart gepolt, dass bei aktiviertem Aktor sich der Innere und der äußere Magnet abstoßen und somit der Abgang (d.h. ein Zuleitungsabschnitt) für den oberen Sprüharm geöffnet wird. Dann wird die Pumpe hochgefahren und somit der untere Sprüharmabgang verschlossen. Der Aktor kann nach dem Hochfahren der Pumpe wieder abgeschaltet werden, da die Klappe durch den hydraulischen Druck in Position gehalten wird. Um die Öffnung für die untere Sprühebene wieder zu öffnen, wird die Pumpendrehzahl soweit reduziert, dass die Klappe wieder in Ausgangsstellung zurückfällt. In dieser Stellung ziehen sich der innere und der äußere Magnet an. Die Klappe wird, wie in den folgenden Figuren auch dargestellt, somit in dieser Position gehalten.

Als Vorteile dieser vorteilhaften Ausführungsvariante sind der geringe Platzbedarf, die kostengünstige Herstellung, sowie der geringere Materialeinsatz zu nennen. Außerdem sind keine zusätzlichen Dichtstellen für eine mechanische Betätigung von Verschlussmechanismen, wie Drehscheiben oder Trommeln notwendig. Es ergeben sich optimierte, schnellere Wechselzeiten zwischen den Positionen der Klappe und eine verbesserte Dichtheit in den verschlossenen Abgängen zu den Spülflüssigkeits-Sprüheinrichtungen.

Sonstige zweckmäßige Weiterbildungen der Erfindung sind in den Unteransprüchen wiedergegeben.

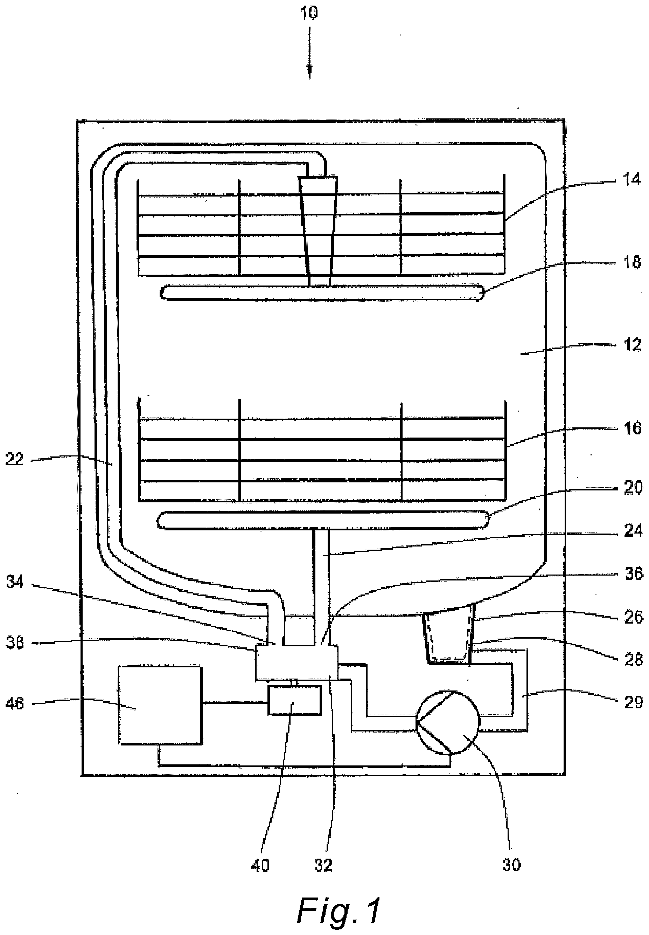

Eine vorteilhafte Ausführungsform der Erfindung ist an Hand einer in den Figuren 1 bis 6 beispielhaft dargestellten Ventilvorrichtung einer Haushaltsgeschirrspülmaschine aufgezeigt und beschrieben.

Aus der detaillierten Beschreibung dieses konkreten Ausführungsbeispiels ergeben sich auch weitere generelle Merkmale und Vorteile der vorliegenden Erfindung und ihrer Weiterbildungen.

Es zeigen jeweils schematisch:
- Figur 1: eine vorteilhafte Ausführungsvariante einer erfindungsgemäß ausgebildeten Haushaltsgeschirrspülmaschine mit einer Ventilvorrichtung und einer Umwälzpumpe zum Fördern von Spülflüssigkeit zu Spülflüssigkeits-Sprüheinrichtungen;
- Figur 2: eine Draufsicht auf eine Umwälzpumpe zum Fördern von Spülflüssigkeit der Haushaltsgeschirrspülmaschine von Figur 1 mit nach einer vorteilhaften Ausführungsvariante der Erfindung ausgebildeten Ventilvorrichtung;
- Figur 3: eine Schnittdarstellung durch die Umwälzpumpe mit der Ventilvorrichtung gemäß Fig. 2;
- Figur 4: eine Teilschnittansicht durch die Ventilvorrichtung von Figur 3 mit einer Verschlussklappe in einer ersten Stellung;
- Figur 5: eine Teilschnittansicht durch die Ventilvorrichtung von Figur 3 mit der Verschlussklappe in einer zweiten Stellung; und
- Figur 6: eine Teilschnittansicht durch die Ventilvorrichtung von Figur 3 mit einem Stellglied, das einen längsverstellbaren Schieber aufweist und gleichzeitiger Darstellung der Verschlussklappe sowohl in der ersten als auch in der zweiten Stellung.

Elemente mit gleicher Funktion und Wirkungsweise sind in den Figuren 1 mit 6 jeweils mit denselben Bezugszeichen versehen.

Die Figur 1 zeigt schematisch eine Haushaltsgeschirrspülmaschine 10 mit einem Spülbehälter 12, in dem ein oberer Korb 14 und ein unterer Korb 16 angeordnet sind. Unterhalb des oberen Korbes 14 ist eine obere Spülflüssigkeits-Sprüheinrichtung 18 und unterhalb des unteren Korbes 16 eine untere Spülflüssigkeits-Sprüheinrichtung 20 jeweils in Form eines Sprüharmes drehbar gelagert. Die untere Spülflüssigkeits-Sprüheinrichtung 20 wird über eine erste Zuleitung 24 und die obere Spülflüssigkeits-Sprüheinrichtung 18 über eine zweite Zuleitung 22 mit Spülflüssigkeit versorgt. Unterhalb des Spülbehälters 12 ist ein Sumpf 26 mit einem Siebeinsatz 28 angeordnet, der über eine Flüssigkeitsleitung 29 mit einer Umwälzpumpe 30 verbunden ist. Die Umwälzpumpe steht mit einer Ventilvorrichtung 32 in Verbindung. Die Ventilvorrichtung 32 weist zwei Zuleitungsabschnitte 34, 36 auf, wobei der erste Zuleitungsabschnitt 36 über die Zuleitung 24 mit der unteren Spülflüssigkeits-Sprüheinrichtung 20 und der zweite Zuleitungsabschnitten 34 über eine Zuleitung 22 mit der oberen Spülflüssigkeits-Sprüheinrichtung 18 verbunden ist. Innerhalb der Ventilvorrichtung 32 ist eine Verschlussklappe 38 schwenkbar gelagert. Die Verschlussklappe 38 ist von einem außerhalb der Ventilvorrichtung 32 angeordnetem Stellglied 40 aktivierbar. Das Stellglied 40 ist von einer Steuerungseinrichtung 46 ansteuerbar. Die Steuerungseinrichtung 46 ist außerdem mit der Umwälzpumpe 30 verbunden, so dass unter anderem auch die Fördermenge bzw. die Fördergeschwindigkeit der Spülflüssigkeit bspw. durch eine Änderung der Drehzahl eines die Umwälzpumpe 30 antreibenden Motors gesteuert werden kann.

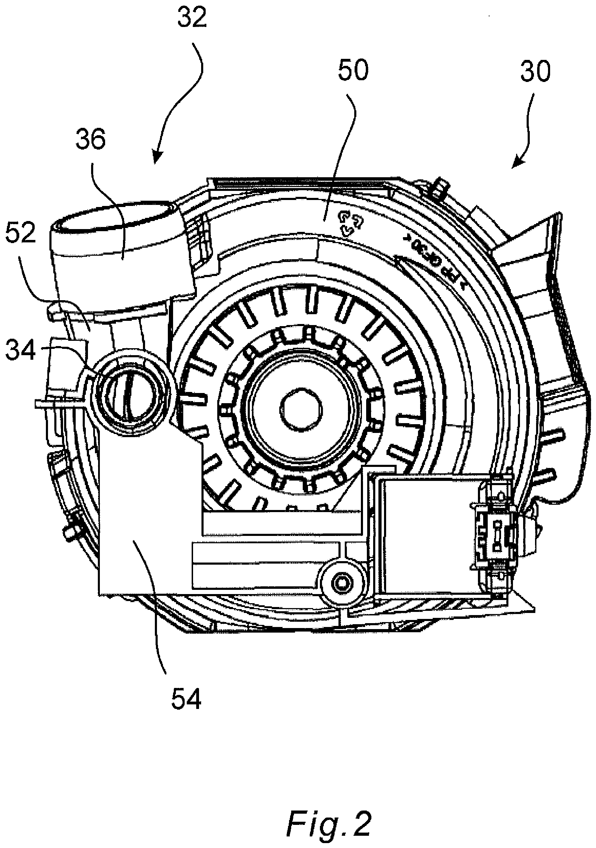

In der Fig. 2 ist ein Pumpengehäuse 50 der Umwälzpumpe 30 in der axialen Draufsicht gezeigt. Das Pumpengehäuse 50 weist eine annähernd zylindrische Gestalt mit etwa kreisförmigem Querschnitt auf. In der Fig. 2 ist auf der linken Seite in mittlerer Höhe des Pumpengehäuses 50 ein Gehäuse 52 der Ventilvorrichtung 32 einstückig angeformt. Das Gehäuse 52 der Ventilvorrichtung 32 weist den ersten Zuleitungsabschnitt 36 auf, der in Fig. 2 im Wesentlichen nach oben ragend ausgerichtet dargestellt ist. Der erste Zuleitungsabschnitt 36 ist als Stutzen geformt, der einteilig mit dem Gehäuse 52 ausgebildet ist und an dem die erste Zuleitung 24 (siehe Figur 1) bspw. in Form eines Schlauches angeschlossen ist. Der erste Zuleitungsabschnitt 36 dient der Versorgung der ersten d.h. unteren Spülflüssigkeits-Sprüheinrichtung 20, welche die Haupt-Spülflüssigkeits-Sprüheinrichtung bildet. Der erste Zuleitungsabschnitt 36 weist zur Förderung einer grö-ßeren Flüssigkeitsmenge einen großen Kreis-Querschnitt auf.

Unterhalb des ersten Zuleitungsabschnitts 36 ist an dem Gehäuse 52 der zweite Zuleitungsabschnitt 34 in einem Winkel von weniger als 90° vom ersten Zuleitungsabschnitt 36 abgewinkelt aus der Zeichnungsebene der Fig. 2 heraus ragend ausgerichtet dargestellt. Der zweite Zuleitungsabschnitt 34 ist in analoger Weise als Stutzen geformt, der einteilig mit dem Gehäuse 52 ausgebildet ist und an dem die zweite Zuleitung 22 (siehe Figur 1) bspw. in Form eines Schlauches angeschlossen ist. Der zweite Zuleitungsabschnitt 34 dient der Versorgung der zweiten d.h. oberen Spülflüssigkeits-Sprüheinrichtung 18, welche eine Oberkorb-Spülflüssigkeits-Sprüheinrichtung bildet. Der zweite Zuleitungsabschnitt 34 weist zur Förderung einer geringeren Flüssigkeitsmenge einen kleinen Kreis-Querschnitt als der erste Zuleitungsabschnitt 36 auf. Dabei bilden die beiden Y-Zuleitungsabschnitte insbesondere eine Y-Verzweigung, d.h. deren gemeinsame Zuleitung 29 zweigt sich in zwei separate Zuleitungsabschnitte als Gabeläste auf. Es ist also ein gemeinsamer Kanal- bzw. Leitungsabschnitt 29 vorgesehen, der sich in zwei verschiedene Leitungsäste 34, 36 aufzweigt, die vorzugsweise in zwei verschiedene Richtungen zeigen. Die einzelne, zwei Zuleitungsabschnitten gemeinsam, d.h. zugleich zugeordnete Verschlussklappe funktioniert dabei wie eine Weiche, die von der Umwälzpumpe kommende Spülflüssigkeit, insbesondere zeitlich intermittierend, also wechselnd, entweder dem einen Zuleitungsabschnitt oder dem anderen Zuleitungsabschnitt zu der einen oder der anderen Spülflüssigkeits-Sprüheinrichtung zuweist.

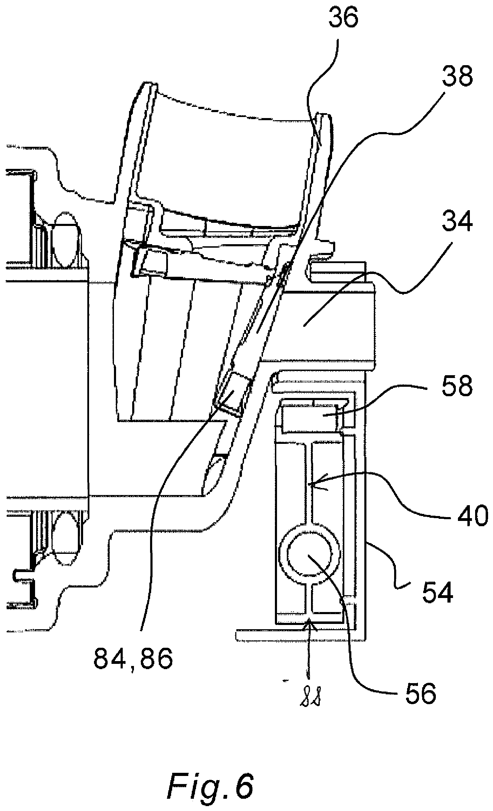

Unter dem zweiten Zuleitungsabschnitt 34 ist eine Kammer 54 angeordnet, in der das zu Fig. 6 näher erläuterte Stellglied 40, welches einen Schieber 56 mit daran angebrachtem Magneten 58 aufweist, verschieblich gelagert ist.

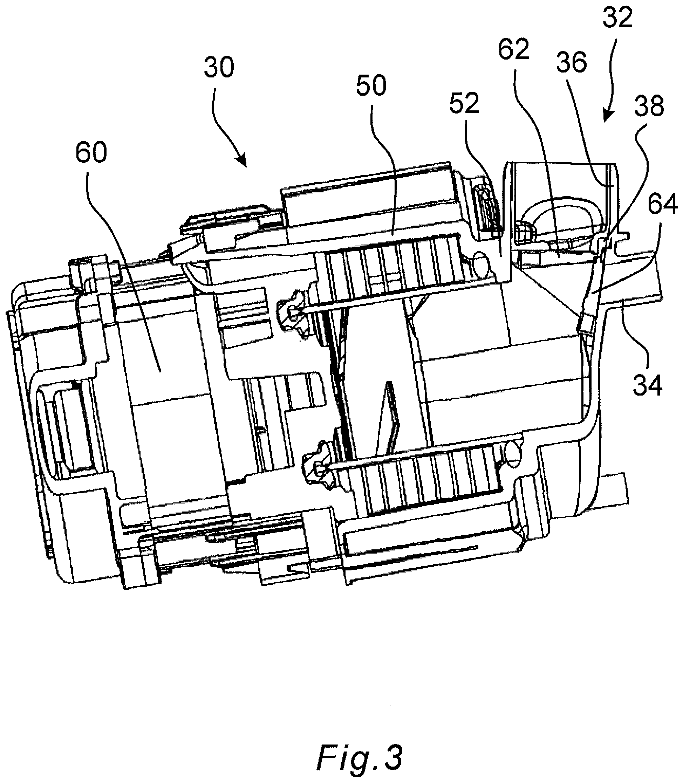

Die Fig. 3 zeigt die Umwälzpumpe 30 in einer Schnittdarstellung parallel zur axialen Erstreckung der Umwälzpumpe 30. Das Pumpengehäuse 50 trägt an seinem in Fig. 3 links dargestellten Ende einen Pumpenmotor 60. An einem dem Pumpenmotor 60 gegenüberliegenden Ende des Pumpengehäuses 50 ist das Gehäuse 52 der Ventilvorrichtung 32 an das Pumpengehäuse 50 unmittelbar angeformt. Der erster Zuleitungsabschnitt 36 ist in etwa vertikal nach oben öffnend ausgerichtet dargestellt. Der zweite Zuleitungsabschnitt 34 ist in etwa horizontal in Fig. 3 nach rechts weisend dargestellt. Die Verschlussklappe 38 ist zur vereinfachten Darstellung sowohl in einer ersten Stellung 62, als auch in einer zweiten Stellung 64 jeweils in einer Schließstellung gezeigt. In der ersten Stellung 62 der Verschlussklappe 38 ist der erste Zuleitungsabschnitt 36 durch die Verschlussklappe 38 flüssigkeitsdicht verschlossen, so dass keine Flüssigkeit zu der unteren d.h. ersten Spülflüssigkeits-Sprüheinrichtung 20 gelangen kann. In der zweiten Stellung 64 der Verschlussklappe 38 ist der zweite Zuleitungsabschnitt 34 durch die Verschlussklappe 38 flüssigkeitsdicht verschlossen, so dass keine Flüssigkeit zu der oberen d.h. zweiten Spülflüssigkeits-Sprüheinrichtung 18 gelangen kann.

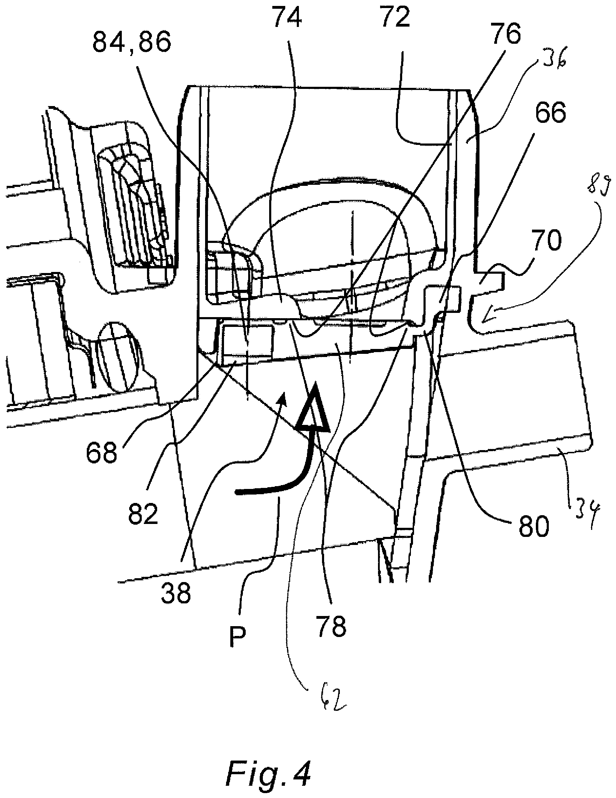

In der Fig. 4 ist die Verschlussklappe 38 in der ersten Stellung 62 in einem vergrößerten Ausschnitt gezeigt. Die Verschlussklappe 38 weist ein erstes Ende 66 auf, das feststehend angeordnet ist. Die Verschlussklappe 38 weist ein zweites Ende 68 auf, das frei angeordnet ist, bzw. frei schwenkbar ist. Das erste, feststehend Ende 66 bildet insoweit einen Fuß der Verschlussklappe 38, der ortsfest fixiert ist. Für seine ortsfeste Fixierung ist das erste Ende 66 zwischen einer Wand 70 des Gehäuses 52 der Ventilvorrichtung 32 und einem Ventil-Einsatz 72 eingeklemmt oder eingeklebt. Der Ventil-Einsatz 72 ist ein vom Gehäuse 52 getrenntes, separates Bauteil, dass in den Stutzen des ersten Zuleitungsabschnitts 36 eingeschoben, bzw. eingepresst oder eingeklebt ist. Der Ventil-Einsatz 72 weist einen Ventilsitz 74 auf. Der Ventilsitz 74 ist an dem Ventil-Einsatz 72 angeformt und bildet einen den Querschnitt des ersten Zuleitungsabschnitts 36 verengenden Ring, an dessen der Verschlussklappe 38 zugewandten Seite eine ebene ringförmige Sitzfläche 76 ausgestaltet ist. Der Ventil-Einsatz 72 zusammen mit dem Ventilsitz 74 und der Sitzfläche 76 kann als Kunststoff-Einsatzteil hergestellt sein. Die Verschlussklappe 38 trägt an ihrer der Sitzfläche 76 zugewandten Seite eine Dichtfläche 78 welche in der Schließstellung der Verschlussklappe 38 auf der Sitzfläche 76 flüssigkeitsdichtend aufliegt. Das zweite Ende 68 der Verschlussklappe 38 ist über einen Materialverdünnungsabschnitt 80 mit dem ersten Ende 66 verbunden. In der in Fig. 4 dargestellten Lage der Verschlussklappe 38 ist der Materialverdünnungsabschnitt 80 um ca. 90° aus seiner entspannten Ruhelage verbogen. Somit ist in der gezeigten horizontalen Lage des zweiten Endes 68 die Verschlussklappe 38 in einem federartig vorgespannten Zustand, d.h. aufgrund des gebogenen Materialverdünnungsabschnitts 80 werden Spannungskräfte erzeugt, welche dem zweiten Ende 68 der Verschlussklappe 38 die Tendenz aufprägen, dass sich die Verschlussklappe 38 nach unten aufschwenkend bewegt, d.h. sich von der Sitzfläche 76 löst und den ersten Zuleitungsabschnitt 36 zum Durchströmen mit Spülflüssigkeit freigibt, so dass die erste, d.h. untere Spülflüssigkeits-Sprüheinrichtung 20 mit Spülflüssigkeit versorgt wird. Aufgrund eines von der Umwälzpumpe 30 erzeugten hohen Flüssigkeitsdrucks (Pfeil P) auf die Verschlussklappe 38 bleibt die Verschlussklappe 38 jedoch gegen die Sitzfläche 76 dichtend gedrückt, solange die vom Flüssigkeitsdruck erzeugte Schließkraft größer ist, als die Öffnungskraft aufgrund der inneren Materialspannung in dem gebogenen Materialverdünnungsabschnitt 80 und/oder die nach unten gerichtete Eigengewichtskraft des freien Endes 68 der Verschlussklappe 38. Je nach Anwendungsfall und bei nicht ausreichender Öffnungskraft aufgrund der inneren Materialspannung in dem gebogenen Materialverdünnungsabschnitt 80 kann die Öffnungskraft ggf. durch ein zusätzliches Federelement verstärkt werden. Die Verschlussklappe 38 bzw. das zweite Ende 68 der Verschlussklappe 38 weist eine Aussparung 82 für ein ferromagnetisches Element 84 oder einen Permanentmagneten 86 auf.

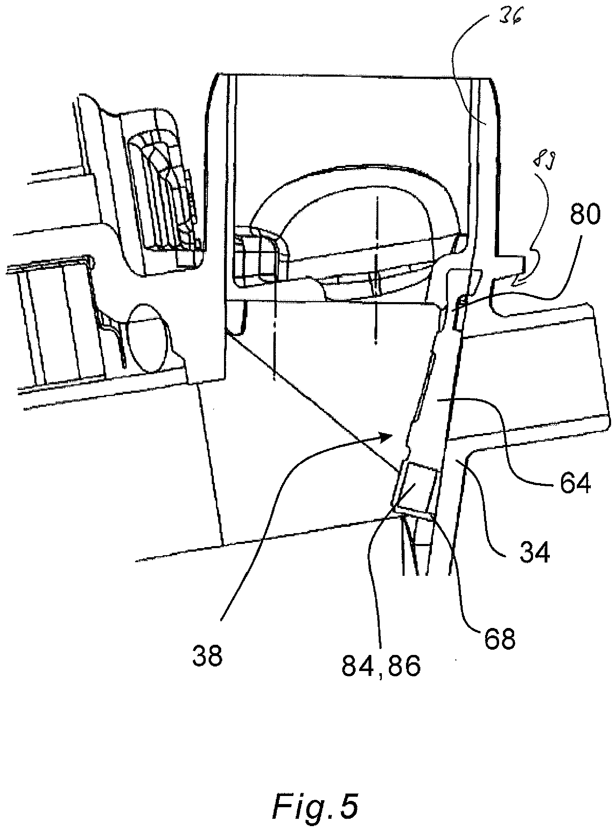

In der Fig. 5 ist die Verschlussklappe 38 in der zweiten Stellung 64 in einem vergrößerten Ausschnitt gezeigt. Wenn der Flüssigkeitsdruck der Umwälzpumpe 30 nicht ausreichend hoch ist, um die Verschlussklappe 38 in ihrer ersten Stellung 62 gemäß Fig. 4 zu halten, so überwiegt die Öffnungskraft aufgrund der inneren Materialspannung in dem gebogenen Materialverdünnungsabschnitt 80 und die Verschlussklappe 38 schwenkt nach unten in die Stellung gemäß Fig. 5, in der die Verschlussklappe 38 im Wesentlichen vertikal ausgerichtet und der Materialverdünnungsabschnitt 80 entspannt ist, d.h. sich in seiner Grundstellung befindet. In dieser entspannten Grundstellung des Materialverdünnungsabschnitts 80 bzw. des ersten Endes 68 der Verschlussklappe 38 reichen die auf die Verschlussklappe 38 wirkenden Restkräfte von evtl. geringfügiger Restspannung in dem Materialverdünnungsabschnitt 80 und/oder die geringen Kräfte aufgrund eines reduzierten Flüssigkeitsdrucks mitunter nicht aus, um die Verschlussklappe 38 zuverlässig dichtend gegen den zweiten Zuleitungsabschnitt 34 zu halten. Es ist deshalb vorgesehen, mittels des ferromagnetischen Elements 84 oder des Permanentmagneten 86 eine zusätzliche Schließkraft auf die Verschlussklappe 38 auszuüben, um die Verschlussklappe 38 flüssigkeitsdichtend an dem Zuleitungsabschnitt 34 zu halten. Die Bedeutung und weitere Funktionsweise des ferromagnetischen Elements 84 bzw. des Permanentmagneten 86 ist zur Fig. 6 näher erläutert.

Wie in Fig. 6 gezeigt weist deshalb die Verschlussklappe 38 entweder das ferromagnetische Element 84 oder den Permanentmagneten 86 auf. Unter dem zweiten Zuleitungsabschnitt 34 ist die Kammer 54 angeordnet, in der das Stellglied 40, welches den Schieber 56 mit daran angebrachtem Magneten 58 aufweist, verschieblich gelagert ist. Im dargestellten Ausführungsbeispiel ist der Schieber 56 bzw. das Stellglied 40 linear verschieblich und zwar in einer zur Darstellungsebene der Fig. 6 senkrechten Richtung, also aus der Zeichnungsebene der Fig. 6 heraus verschieblich. Durch das Verschieben des Schiebers 56 bzw. des Stellglieds 40 kann der Magnet 58 in eine räumliche Nähe zu dem ferromagnetischen Element 84 bzw. dem Permanentmagneten 86 gebracht werden, so dass ein ausreichend hohes magnetisches Feld auf das ferromagnetische Elements 84 bzw. den Permanentmagneten 86 wirken kann. Dabei wird dann aufgrund der anziehenden Wirkung im magnetischen Feld die Verschlussklappe 38 gegen den zweiten Zuleitungsabschnitt 34 gezogen, so dass die Verschlussklappe 38 den Zuleitungsabschnitt 34 dichtend verschließt. Zur Erzeugung einer anziehenden Wirkung von Magnet 58 des Stellglieds 40 und im Falle der Verwendung eines ferromagnetischen Elements 84, bspw. eines Eisenmetalls der Verschlussklappe 38 spielt die jeweilige magnetische Polung des Magneten 58 keine Rolle, da zwischen Magnet 58 und ferromagnetischen Element 84 stets nur eine anziehende magnetische Wirkung erzeugt wird. Magnet 58 und ferromagnetischen Element 84 können auch alternativ vertauscht angeordnet sein, d.h. der Magnet kann an der Verschlussklappe 38 und das ferromagnetische Element an dem Stellglied 40 vorgesehen sein. Ob eine dichtende Kraft auf die Verschlussklappe 38 ausgeübt wird hängt dabei nur von dem räumlichen Abstand von Magnet und ferromagnetischem Element ab. Der räumliche Abstand wird durch die Position des Stellglieds 40 bestimmt.

Wenn der Verschlussklappe 38, wie in einer weiteren vorteilhaften Ausführungsvariante der Erfindung, nicht nur eine den Zuleitungsabschnitt 34 dicht schließende Kraft aufgeprägt werden soll, sondern auch eine die Verschlussklappe 38 zumindest geringfügig öffnende Kraft aufgeprägt werden soll, so ist das ferromagnetische Element 84 durch einen Magneten, insbesondere einen Permanentmagneten 86 zu ersetzten. Der Permanentmagnet 86 ist dann an der Verschlussklappe 38 derart angeordnet, dass in der den Zuleitungsabschnitt 34 schließenden Position einer seiner Pole in Richtung des Stellglieds 40 bzw. des Magneten 58 weist. Die beiden Pole des Magneten 58 sind hingegen senkrecht zur Ausrichtung der Pole des Permanentmagneten 86 ausgerichtet. Die Pole des Magneten 58 sind also in einer Richtung aus der Zeichnungsebene der Fig. 6 heraus ausgerichtet. Durch Verschieben des Stellglieds 40 kann entweder der eine Pol des Magneten 58 oder der andere Pol des Magneten 58 in die Nähe des auf den Magneten 58 zuweisenden Pols des Permanentmagneten 86 der Verschlussklappe 38 gebracht werden. Je nach Paarung der Pole von Magnet 58 und Permanentmagneten 86 wird eine anziehende Wirkung erreicht, welche die Verschlussklappe 38 auf den Zuleitungsabschnitt 34 zu bewegt oder eine abstoßende Wirkung erreicht, welche die Verschlussklappe 38 von dem Zuleitungsabschnitt 34 weg bewegt. Durch Verschieben des Stellglieds 40 kann also von au-ßerhalb des Gehäuses 52 die innere Verschlussklappe 38 bewegt werden, d.h. der Zuleitungsabschnitt 34 geöffnet oder geschlossen werden. Ist die Verschlussklappe 38 aufgrund der abstoßenden Wirkung zumindest teilweise geöffnet, d.h. in Richtung des Zuleitungsabschnitt 36 verschwenkt, so kann eine hydraulische Stellkraft aufgrund einer erhöhten Flüssigkeitsströmung die Verschlussklappe 38 vollständig nach oben schwenken, bis die Verschlussklappe 38 den ersten Zuleitungsabschnitt 36 vollständig dichtend verschließt. In dieser Stellung ist dann die abstoßende Wirkung von Magnet 58 und Permanentmagnet 86 nicht mehr wirksam und auch nicht erforderlich, da der Flüssigkeitsdruck die Schließkraft in Richtung des Zuleitungsabschnitts 36 bewirkt.

Zusammenfassend betrachtet können insbesondere folgende Ausführungsvarianten zweckmäßig sein:
Die schwenkbare Verschlussklappe weist ein erstes Ende, insbesondere einen Klappenfuß auf, das oder der bezüglich des Zuleitungsabschnitts gelagert ist und ein zweites, insbesondere freies Ende, das zwischen der ersten Stellung und der zweiten Stellung hin und her verschwenkbar ist. Dabei ist das erste Ende der Verschlussklappe zweckmäßigerweise in einem ersten Zuleitungsabschnitt befestigt. Das zweite Ende der Verschlussklappe kann vorzugsweise zungenartig oder lamellenartig ausgebildet sein.

Insbesondere ist das erste Ende zwischen einem Abschnitt des Gehäuses der Ventilvorrichtung und einem in den Abschnitt des Gehäuses eingesetzten Ventilsitz-Einsatz klemmend befestigt. Das erste Ende der Verschlussklappe kann nach einer vorteilhaften Ausführungsvariante zumindest in mindesten einem Teilbereich oder insgesamt, d.h. entlang seiner Gesamterstreckung, als Achse, insbesondere weitgehend starre Achse, ausgebildet sein, die über mindestens eine mechanische Lagerstelle mit einem im Gehäuse der Ventilvorrichtung eingesetzten Ventilsitz-Einsatz und/oder dem Gehäuse der Ventilvorrichtung fest verbunden ist. Die Verschlussklappe kann insbesondere mit ihrem ersten Ende in mindestens einem Drehgelenk, insbesondere Scharnier, oder dergleichen schwenkbar gelagert sein, das an einem im Gehäuse der Ventilvorrichtung eingesetzten Ventilsitz-Einsatz und/oder an einer Innenwand des Gehäuses der Ventilvorrichtung angebracht ist. Für das erste Ende und/oder das zweite Ende der Verschlussklappe kann nach dieser vorteilhaften Ausführungsvariante vorzugsweise ein formstabiles, insbesondere formsteifes Formteil, insbesondere Kunststoffteil, gewählt sein.

Das erste Ende der Verschlussklappe kann in besonders vorteilhafter Weise mit dem zweiten, insbesondere freien Ende der Verschlussklappe über einen filmscharnierartigen Materialverdünnungsabschnitt der Verschlussklappe verbunden sein. In diesem Fall ist es besonders zweckmäßig, die Verschlussklappe, insbesondere deren erstes Ende und/oder zweites Ende, aus einem flexiblen, insbesondere federelastischen Material, insbesondere Kunststoffmaterial wie z.B. flexibles Silikonmaterial, herzustellen.

Die Verschlussklappe kann in vorteilhafter Weise mit ihrem ersten Ende in einem Bereich zwischen einem ersten Zuleitungsabschnitt zu einer ersten Spülflüssigkeits-Sprüheinrichtung, und einem zweiten Zuleitungsabschnitt zu einer zweiten Spülflüssigkeits-Sprüheinrichtung befestigt sein, wobei in der ersten Stellung der erste Zuleitungsabschnitt von dem zweiten, insbesondere frei beweglichen Ende, der Verschlussklappe, insbesondere weitgehend spülflüssigkeits-abdichtend, verschlossen und der zweite Zuleitungsabschnitt freigegeben ist, sowie in der zweiten Stellung der erste Zuleitungsabschnitt von dem zweiten, insbesondere frei beweglichen Ende der Verschlussklappe freigegeben und der zweite Zuleitungsabschnitt, insbesondere weitgehend spülflüssigkeits-abdichtend, verschlossen ist. Der erste Zuleitungsabschnitt und der zweite Zuleitungsabschnitt bilden dabei insbesondere eine Y-Verzweigung, d.h. eine gemeinsame Zuleitung zweigt sich in zwei separate Zuleitungsabschnitte als Gabeläste auf, die in voneinander verschiedene Richtungen weisen. Der erste Leitungsabschnitt und der zweite Leitungsabschnitt der Y-Verzweigung sind vorzugsweise in einem spitzen Winkel zueinander ausgerichtet angeordnet. Dabei ist die Verschlussklappe, vorzugsweise deren erstes Ende, im Bereich der Astgabel der Y-Verzweigung angebracht, insbesondere angelenkt.

Die Ventileinrichtung ist in vorteilhafter Weise derart ausgebildet, dass sich bereits allein durch eine spezifische Veränderung der Strömungscharakteristik wie z.B. des Flüssigkeitsdrucks, der Strömungsgeschwindigkeit, Strömungsrichtungen und/oder sonstiger Fluidströmungsparameter der Spülflotte bzw. Spülflüssigkeit in der Y-Verzweigung das frei bewegliche Ende der Verschlussklappe von einer zweiten Schließstellung, in der sie den zweiten Zuleitungsabschnitt weitgehend spülflüssigkeits-abdichtend abschließt, in eine erste Schließstellung, in der sie den ersten Zuleitungsabschnitt weitgehend spülflüssigkeits-abdichtend abschließt, selbsttätig bringen Zusätzlich oder unabhängig hiervon lässt sich das frei bewegliche Ende der Verschlussklappe ggf. auch in umgekehrter Richtung von seiner ersten Schließstellung für den ersten Zuleitungsabschnitt in seine zweite Schließstellung für den zweiten Zuleitungsabschnitt ebenfalls durch eine hydraulische Stellkraft bewegen, die auf einer Veränderung der Strömungscharakteristik in der Y-Verzweigung beruht. Das freie Ende der Verschlussklappe lässt sich also in Abhängigkeit von einer hydraulischen Stellkraft, die durch eine gezielte Veränderung der Strömungsverhältnisse der Spülflotte bzw. Spülflüssigkeit in der Y-Verzweigung erzeugt wird, zwischen der zweiten und der ersten Schließstellung hin- und her verstellen.

In der Praxis kann es insbesondere zweckmäßig sein, wenn das freie Ende der Verschlussklappe durch eine solche hydraulische Stellkraft der Spülflüssigkeit bzw. Spülflotte lediglich in eine seiner beiden Klapprichtungen wie z.B. von der zweiten Schließstellung in die erste Schließstellung gedrückt wird und es dabei mit einer Eigenspannung oder Federspannung gegenüber seiner Ausgangsstellung beaufschlagt wird, während es bei Nachlassen des Fluiddrucks in die andere Richtung insbesondere aufgrund seines Eigengewichts und/oder aufgrund seiner Eigenspannung bzw. Federelastizität, die es in seiner ausgelenkten Ausgangsstellung aufweist, in seine weitgehend unausgelenkte und damit entspannte Ausgangslage zurückgedrückt wird. Ggf. kann es zusätzlich oder unabhängig hiervon zweckmäßig sein, diesen Rückstellvorgang des freien Endes der Verschlussklappe in seine Ausgangsstellung bzw. Ausgangslage - hier in seine zweite Schließstellung - durch eine von außen wirksam werdende Stellkraft wie z.B. einer elektromagnetischen Stellkraft zu unterstützen.

Die Verschlussklappe weist dazu nach einer weiteren zweckmäßigen Ausführungsform im Bereich ihres zweiten, insbesondere frei beweglichen Endes, zur Erzeugung einer auf die Verschlussklappe zusätzlich wirkenden Öffnungskraft oder Schließkraft in Abhängigkeit eines von außerhalb der Ventilvorrichtung erzeugten Magnetfeldes ein ferromagnetisches Element oder einen Permanentmagneten auf. Ein außerhalb eines Gehäuses der Ventilvorrichtung angeordnetes Stellglied kann insbesondere einen dem ferromagnetischen Element zugewandten Magneten beliebiger magnetischer Polung oder einen dem Permanentmagneten in einer ersten Position des Stellgliedes zugewandten Magneten unterschiedlicher Polung zum Erzeugen einer zusätzlichen Haltekraft, insbesondere Schließkraft, zum Halten der Verschlussklappe in ihrer zweiten Stellung aufweisen. Die Verschlussklappe kann in ihrer zweiten Stellung vorzugsweise den zweiten Leitungsabschnitt der Y-Verzweigung weitgehend spülflüssigkeits-abdichtend abschließen, während der erste Zuleitungsabschnitt der Y-Verzweigung, vom zweiten, insbesondere freien Ende der Verschlussklappe freigegeben ist. Ein außerhalb des Gehäuses der Ventilvorrichtung angeordnetes Stellglied kann zweckmäßigerweise einen dem Permanentmagneten in einer zweiten Position des Stellgliedes zugewandten Magneten gleicher Polung aufweisen, zum Erzeugen einer zusätzlichen elektromagnetischen Stellkraft zum Wegbewegen der Verschlussklappe aus ihrer zweiten Stellung derart, dass ein Spülflüssigkeitsdruckunterschied erzeugbar ist, der eine hydraulische Stellkraft zum Schwenken der Verschlussklappe in ihre erste Stellung bewirkt. Die Verschlussklappe schließt dabei in ihrer ersten Stellung den ersten Leitungsabschnitt der Y-Verzweigung im Wesentlichen spülflüssigkeits-abdichtend ab, während der zweite Zuleitungsabschnitt der Y-Verzweigung vom zweiten, insbesondere freien Ende der Verschlussklappe freigegeben ist. Das Stellglied kann vorzugsweise einen von einem Antrieb zu betätigenden längsverstellbaren Schieber aufweisen. Dabei kann der Antrieb durch einen mittels einer elektromagnetischen Spule aktivierbaren Hubmagnet gebildet sein.

Die Ventilvorrichtung kann vorzugsweise in das Pumpengehäuse der Umwälzpumpe, insbesondere in deren Austrittsbereich, integriert sein, oder das Gehäuse der Ventilvorrichtung kann an das Pumpengehäuse der Umwälzpumpe, insbesondere in deren Austrittsbereich, angeflanscht sein. Allgemein ausgedrückt ist also die Ventilvorrichtung als hydraulisch unterstützte Wasserweiche für die Umwälzpumpe ausgebildet. Diese Wasserweiche ist vorzugsweise in einem ausgangsseitigen Bereich der Umwälzpumpe integriert.

### Bezugszeichenliste:

- 10: Haushaltsgeschirrspülmaschine
- 12: Spülbehälter
- 14: Oberer Korb
- 16: Unterer Korb
- 18: Zweite (obere) Spülflüssigkeits-Sprüheinrichtung
- 20: Erste (untere) Spülflüssigkeits-Sprüheinrichtung
- 22: Zweite Zuleitung
- 24: Erste Zuleitung
- 26: Sumpf
- 28: Siebeinsatz
- 29: Flüssigkeitsleitung
- 30: Umwälzpumpe
- 32: Ventilvorrichtung
- 34: Zweiter Zuleitungsabschnitt
- 36: Erster Zuleitungsabschnitt
- 38: Verschlussklappe
- 40: Stellglied
- 46: Steuerungseinrichtung
- 50: Pumpengehäuse
- 52: Gehäuse der Ventilvorrichtung
- 54: Kammer
- 56: Schieber
- 58: Magnet
- 60: Pumpenmotor
- 62: Erste Stellung
- 64: Zweite Stellung
- 66: Erstes Ende der Verschlussklappe
- 68: Zweites Ende der Verschlussklappe
- 70: Wand
- 72: Ventilsitz-Einsatz
- 74: Ventilsitz
- 76: Sitzfläche
- 78: Dichtfläche der Verschlussklappe
- 80: Materialverdünnungsabschnitt
- 82: Aussparung
- 84: ferromagnetisches Element
- 86: Permanentmagnet
- 88: Antrieb
- 89: Astgabel

## Patentansprüche

1. Haushaltsgeschirrspülmaschine mit einem Spülbehälter (12), einer oder mehreren im Spülbehälter (12) angeordneten Spülflüssigkeits-Sprüheinrichtungen (18, 20), sowie einer Umwälzpumpe (30) zum Fördern von Spülflüssigkeit, und mit einer Ventilvorrichtung (32) zum Öffnen und Schließen eines Zuleitungsabschnitts (34, 36) zu einer Spülflüssigkeits-Sprüheinrichtung (18, 20) oder von mehreren, insbesondere zwei, Zuleitungsabschnitten (34, 36) zu den mehreren, insbesondere zwei, Spülflüssigkeits-Sprüheinrichtungen (18, 20), wobei die Ventilvorrichtung (32) eine Verschlussklappe (38) aufweist, die aufgrund einer mit einem Spülflüssigkeitsdruckunterschied einhergehenden hydraulischen Stellkraft zwischen einer ersten Stellung (62), in welcher der Zuleitungsabschnitt (36) durch die Verschlussklappe (38) verschlossen ist und einer zweiten Stellung (64), in welcher der Zuleitungsabschnitt (36) von der Verschlussklappe freigegeben ist, schwenkbar angeordnet ist, und wobei die schwenkbare Verschlussklappe (38) ein erstes Ende (66) aufweist, das bezüglich des Zuleitungsabschnitts (34, 36) gelagert ist und ein zweites, insbesondere freies Ende (68) aufweist, das zwischen der ersten Stellung (62) und der zweiten Stellung (64) hin und her verschwenkbar ist, **dadurch gekennzeichnet, dass** das erste Ende (66) der Verschlussklappe (38) im Zuleitungsabschnitt (36) zwischen einem Abschnitt des Gehäuses (52) der Ventilvorrichtung (32) und einem in den Abschnitt des Gehäuses (52) eingesetzten Ventilsitz-Einsatz (72) klemmend befestigt ist.

2. Haushaltsgeschirrspülmaschine nach Anspruch 1, **dadurch gekennzeichnet, dass** das zweite Ende (68) der Verschlussklappe (38) zungenartig oder lamellenartig ausgebildet ist.

3. Haushaltsgeschirrspülmaschine nach Anspruch 1 oder 2, **dadurch gekennzeichnet, dass** das zweite Ende (68) der Verschlussklappe (38) an deren erstem Ende (66) über mindestens ein Drehgelenk, insbesondere Scharnier, schwenkbar gelagert ist.

4. Haushaltsgeschirrspülmaschine nach mindestens einem der Ansprüche 1 mit 3, **dadurch gekennzeichnet, dass** das erste Ende (66) mit dem zweiten, insbesondere freien Ende (68) der Verschlussklappe (38) über einen filmscharnierartigen Materialverdünnungsabschnitt (80) der Verschlussklappe (38) verbunden ist.

5. Haushaltsgeschirrspülmaschine nach mindestens einem der Ansprüche 1 mit 4, **dadurch gekennzeichnet, dass** für das erste Ende (66) und/oder das zweite Ende (68) der Verschlussklappe (38) ein formstabiles, insbesondere formsteifes Formteil, insbesondere Kunststoffteil, gewählt ist.

6. Haushaltsgeschirrspülmaschine nach mindestens einem der Ansprüche 1 mit 5, **dadurch gekennzeichnet, dass** die Verschlussklappe (38), insbesondere deren erstes Ende (66) und/oder zweites Ende (68), aus einem flexiblen Material, insbesondere Kunststoffmaterial, hergestellt ist.

7. Haushaltsgeschirrspülmaschine nach mindestens einem der vorhergehenden Ansprüche, **dadurch gekennzeichnet, dass** die Verschlussklappe (38) mit ihrem ersten Ende (66) in einem Bereich zwischen einem ersten Zuleitungsabschnitt (36) zu einer ersten Spülflüssigkeits-Sprüheinrichtung (20), und einem zweiten Zuleitungsabschnitt (34) zu einer zweiten Spülflüssigkeits-Sprüheinrichtung (18) befestigt ist, und dass in einer ersten Stellung (62) der erste Zuleitungsabschnitt (36) von dem zweiten, insbesondere frei beweglichen Ende (68), der Verschlussklappe (38) verschlossen und der zweite Zuleitungsabschnitt (34) freigegeben ist, sowie in einer zweiten Stellung (64) der erste Zuleitungsabschnitt (36) von dem zweiten, insbesondere frei beweglichen Ende (68) der Verschlussklappe (38) freigegeben und der zweite Zuleitungsabschnitt (34) verschlossen ist.

8. Haushaltsgeschirrspülmaschine nach Anspruch 7, **dadurch gekennzeichnet, dass** der erste Zuleitungsabschnitt (36) und der zweite Zuleitungsabschnitt (34) eine Y-Verzweigung bilden, und dass die Verschlussklappe (38), insbesondere deren erstes Ende (66), im Bereich der Astgabel der Y-Verzweigung angebracht, insbesondere angelenkt, ist.

9. Haushaltsgeschirrspülmaschine nach Anspruch 8, **dadurch gekennzeichnet, dass** der erste Leitungsabschnitt (36) und der zweite Leitungsabschnitt (34) der Y-Verzweigung in einem spitzen Winkel zueinander ausgerichtet angeordnet sind.

10. Haushaltsgeschirrspülmaschine nach mindestens einem der vorhergehenden Ansprüche, **dadurch gekennzeichnet, dass** die Verschlussklappe (38) im Bereich ihres zweiten, insbesondere frei beweglichen Endes (68), zur Erzeugung einer auf die Verschlussklappe (38) zusätzlich wirkenden Stellkraft, insbesondere Öffnungskraft oder Schließkraft, in Abhängigkeit eines von außerhalb der Ventilvorrichtung (32) erzeugten Magnetfeldes ein ferromagnetisches Element (84) oder einen Permanentmagneten (86) aufweist.

11. Haushaltsgeschirrspülmaschine nach Anspruch 10, **dadurch gekennzeichnet, dass** ein außerhalb eines Gehäuses (52) der Ventilvorrichtung (32) angeordnetes Stellglied (40) einen dem ferromagnetischen Element (84) zugewandten Magneten (58) beliebiger magnetischer Polung oder einen dem Permanentmagneten (86) in einer ersten Position des Stellgliedes (40) zugewandten Magneten (58) unterschiedlicher Polung zum Erzeugen einer zusätzlichen Haltekraft, insbesondere Schließkraft, zum Halten der Verschlussklappe (38) in ihrer zweiten Stellung (64) aufweist.

12. Haushaltsgeschirrspülmaschine nach Anspruch 11, **dadurch gekennzeichnet, dass** die Verschlussklappe (38) in ihrer zweiten Stellung (64) einen zweiten Leitungsabschnitt (34) spülflüssigkeits-abdichtend abschließt.

13. Haushaltsgeschirrspülmaschine nach Anspruch 12, **dadurch gekennzeichnet, dass** ein außerhalb des Gehäuses (52) der Ventilvorrichtung (32) angeordnetes Stellglied (40) einen dem Permanentmagneten (86) in einer zweiten Position des Stellgliedes (40) zugewandten Magneten (58) gleicher Polung aufweist, zum Erzeugen einer zusätzlichen elektromagnetischen Stellkraft zum Wegbewegen der Verschlussklappe (38) aus ihrer zweiten Stellung (64) derart, dass ein Spülflüssigkeitsdruckunterschied erzeugbar ist, der eine hydraulische Stellkraft zum Schwenken der Verschlussklappe (38) in ihre erste Stellung (62) bewirkt.

14. Haushaltsgeschirrspülmaschine nach Anspruch 13, **dadurch gekennzeichnet, dass** die Verschlussklappe (38) in ihrer ersten Stellung (62) einen ersten Leitungsabschnitt (36) spülflüssigkeits-abdichtend abschließt.

15. Haushaltsgeschirrspülmaschine nach mindestens einem der Ansprüche 11 mit 14, **dadurch gekennzeichnet, dass** das Stellglied (40) einen von einem Antrieb (88) zu betätigenden längsverstellbaren Schieber (56) aufweist.

16. Haushaltsgeschirrspülmaschine nach Anspruch 15, **dadurch gekennzeichnet, dass** der Antrieb (88) ein mittels einer elektromagnetischen Spule aktivierbarer Hubmagnet ist.

17. Haushaltsgeschirrspülmaschine nach mindestens einem der vorhergehenden Ansprüche, **dadurch gekennzeichnet, dass** die Ventilvorrichtung (32) in das Pumpengehäuse (50) der Umwälzpumpe (30), insbesondere in deren Austrittsbereich, integriert ist, oder das Gehäuse (52) der Ventilvorrichtung (32) an das Pumpengehäuse (50) der Umwälzpumpe (30), insbesondere in deren Austrittsbereich, angeflanscht ist.

18. Haushaltsgeschirrspülmaschine nach mindestens einem der vorhergehenden Ansprüche, **dadurch gekennzeichnet, dass** die Ventilvorrichtung (38) als hydraulisch unterstützte Wasserweiche für die Umwälzpumpe (30) ausgebildet ist.

19. Verfahren zum Öffnen und Schließen von ein oder mehreren Zuleitungsabschnitten (34, 36), durch den oder die mittels einer Umwälzpumpe (30) Spülflüssigkeit zu ein oder mehreren Spülflüssigkeits-Sprüheinrichtungen (18, 20) im Spülbehälter (12) einer Haushaltsgeschirrspülmaschine (10) gefördert wird, mit Hilfe einer Ventilvorrichtung (32), insbesondere nach mindestens einem der vorhergehenden Ansprüche, wobei von der Ventilvorrichtung (32) eine schwenkbar angeordnete, ein erstes Ende (66) und ein zweites, insbesondere freies Ende (68) aufweisende Verschlussklappe (38), aufgrund einer mit einem Flüssigkeitsdruckunterschied einhergehenden hydraulischen Stellkraft zwischen einer ersten Stellung (62), in welcher der Zuleitungsabschnitt (36) durch die Verschlussklappe (38) verschlossen wird und einer zweiten Stellung (64), in welcher der Zuleitungsabschnitt (36) von der Verschlussklappe (38) freigegeben wird, geschwenkt wird, **dadurch gekennzeichnet, dass** das erste Ende (66) der Verschlussklappe (38) im Zuleitungsabschnitt (36) zwischen einem Abschnitt des Gehäuses (52) der Ventilvorrichtung (32) und einem in den Abschnitt des Gehäuses (52) eingesetzten Ventilsitz-Einsatz (72) klemmend befestigt ist.

20. Verfahren nach Anspruch 19, **dadurch gekennzeichnet, dass** die im Bereich der Astgabel (89) einer Y-Verzweigung zwischen einem ersten Zuleitungsabschnitt (36) und eines zweiten Zuleitungsabschnitts (34) angebrachte Verschlussklappe (38) der Ventilvorrichtung derart zwischen einer ersten und einer zweiten, insbesondere weitgehend spülflüssigkeits-abdichtenden, Stellung (62, 64) hin- und her geschwenkt wird, dass der erste Zuleitungsabschnitt (36) zu einer ersten Spülflüssigkeits- Sprüheinrichtung (20) und der zweite Zuleitungsabschnitt (34) zu einer zweiten Spülflüssigkeits- Sprüheinrichtung (18) wechselseitig oder intermittierend für Spülflüssigkeit geöffnet oder geschlossen werden.

21. Verfahren nach einem der Ansprüche 19 oder 20, **dadurch gekennzeichnet, dass** zum, insbesondere intermittierenden, Versorgen wahlweise mindestens einer ersten Spülflüssigkeits-Sprüheinrichtung (20) und optional mindestens einer zweiten Spülflüssigkeits-Sprüheinrichtung (18) im Spülbehälter (12) zum Aussprühen einer von einer Umwälzpumpe (30) durch eine Ventilvorrichtung (32) hindurchgeförderten Spülflüssigkeit folgender Verfahrenschritt durchgeführt wird: Erzeugen eines elektromagnetischen Feldes außerhalb eines Gehäuses (52) der Ventilvorrichtung (32), um innerhalb des Gehäuses (52) der Ventilvorrichtung (32) eine Öffnungskraft zu induzieren, die die innerhalb des Gehäuses (52) schwenkbar angeordnete Verschlussklappe (38) aus einer zweiten, insbesondere weitgehend spülflüssigkeits-abdichtenden, Stellung (64) in eine erste, insbesondere weitgehend spülflüssigkeits-abdichtende, Stellung (62) wegbewegt.

22. Verfahren nach Anspruch 21 mit folgendem zusätzlichen Verfahrensschritt: Erhöhen der Umwälzpumpenleistung zum Bewirken einer durch Spülflüssigkeitsdruckunterschied erzeugten Kraft auf die Verschlussklappe (38) zum Bewegen der Verschlussklappe (38) aus ihrer zweiten, insbesondere weitgehend spülflüssigkeits-abdichtenden, Stellung (64) in eine erste, insbesondere weitgehend spülflüssigkeits-dichtende, Stellung (62).

23. Verfahren nach einem der Ansprüche 21 oder 22, bei dem das Wegbewegen der Verschlussklappe (38) aus ihrer zweiten, insbesondere weitgehend spülflüssigkeits-abdichtenden, Stellung (64) an einem zweiten Zuleitungsabschnitt (34), der zu einer zweiten Spülflüssigkeits-Sprüheinrichtung (18) führt, durch eine abstoßende elektromagnetische Wirkung zwischen dem außerhalb des Gehäuses (52) der Ventilvorrichtung (32) erzeugten elektromagnetischen Feldes und einem mit der Verschlussklappe (38) versehenen Permanentmagneten (86) erzielt wird.

24. Verfahren nach mindestens einem der Ansprüche 19 mit 23 mit dem folgenden zusätzlichen Verfahrensschritt:
Reduzieren der Umwälzpumpenleistung zum Verringern der durch einen Spülflüssigkeitsdruckunterschied erzeugten Kraft auf die Verschlussklappe (38) zum Lösen der Verschlussklappe (38) von ihrer ersten, insbesondere weitgehend spülflüssigkeits-abdichtenden, Stellung (62) an einem ersten Zuleitungsabschnitt (36), der zu einer ersten Spülflüssigkeits-Sprüheinrichtung (20) führt.

25. Verfahren nach Anspruch 24 mit dem folgenden zusätzlichen Verfahrensschritt: Erzeugen eines elektromagnetischen Feldes außerhalb des Gehäuses (52) der Ventilvorrichtung (32), um innerhalb des Gehäuses (52) der Ventilvorrichtung (32) eine Schließkraft zu induzieren, welche die innerhalb des Gehäuses (52) schwenkbar angeordnete Verschlussklappe (38) in die zweite, insbesondere weitgehend spülflüssigkeits-abdichtende, Stellung (64) zu bewegt.

26. Verfahren nach Anspruch 25, bei dem das Zubewegen der Verschlussklappe (38) in ihre zweite, insbesondere weitgehend spülflüssigkeits-abdichtende, Stellung (64) an einem zweiten Zuleitungsabschnitt (34) der zweiten Spülflüssigkeits-Sprüheinrichtung (18) durch eine anziehende elektromagnetische Wirkung zwischen dem außerhalb des Gehäuses (52) der Ventilvorrichtung (32) erzeugten elektromagnetischen Feld und einem mit der Verschlussklappe (38) verbundenen Permanentmagneten (86) oder ein ferromagnetischen Element (84) erzielt wird.

27. Verfahren nach mindestens einem der Ansprüche 21 mit 26, bei dem das jeweilig außerhalb des Gehäuses (52) der Ventilvorrichtung (32) erzeugte elektromagnetische Feld durch einen Magneten (58) erzeugt wird, der zur Steuerung der Wirkung auf den innerhalb des Gehäuses (52) der Ventilvorrichtung (32) mit der Verschlussklappe (38) verbundenen Permanentmagneten (86) oder das ferromagnetische Element (84) örtlich zu verstellen ist.

## Claims

1. Household dishwasher having a dishwasher cavity (12), one or more washing liquid spray devices (18, 20) arranged in the dishwasher cavity (12) and a circulating pump (30) for conveying washing liquid, and having a valve apparatus (32) for opening and closing a supply line section (34, 36) to a washing liquid spray device (18, 20) or from several, in particular two, supply line sections (34, 36) to the several, in particular two, washing liquid spray devices (18, 20), wherein the valve apparatus (32) has a cover flap (38), which, on account of a hydraulic throwing force accompanying a washing liquid pressure difference, is arranged pivotably between a first position (62), in which the supply line section (36) is closed by the cover flap (38), and a second position (64), in which the supply line section (36) is released from the cover flap, and wherein the pivotable cover flap (38) has a first end (66), which is mounted with respect to the supply line section (34, 36) and a second, in particular free end (68), which can be pivoted to and fro between the first position (62) and the second position (64), **characterised in that** the first end (66) of the cover flap (38) in the supply line section (36) is fastened with a clamp between a section of the housing (52) of the valve apparatus (32) and a valve seat insert (72) inserted into the section of the housing (52).

2. Household dishwasher according to claim 1, **characterised in that** the second end (68) of the cover flap (38) is embodied in the shape of a tongue or disc.

3. Household dishwasher according to claim 1 or 2, **characterised in that** the second end (68) of the cover flap (38) is mounted pivotably on its first end (66) by way of at least one rotary joint, in particular hinge.

4. Household dishwasher according to at least one of claims 1 to 3, **characterised in that** the first end (66) is connected to the second, in particular free end (68), of the cover flap (38) by way of an integral hinge-type material thinning section (80) of the cover flap (38).

5. Household dishwasher according to at least one of claims 1 to 4, **characterised in that** a dimensionally stable, in particular moulded part which is stiff on demoulding, in particular plastic part, is selected for the first end (66) and/or the second end (68) of the cover flap (38).

6. Household dishwasher according to at least one of claims 1 to 5, **characterised in that** the cover flap (38), in particular its first end (66) and/or second end (68), is produced from a flexible material, in particular plastic material.

7. Household dishwasher according to at least one of the preceding claims, **characterised in that** the cover flap (38) with its first end (66) is fastened in a region between a first supply line section (36) to a first washing liquid spray device (20), and a second supply line section (34) to a second washing liquid spray device (18), and that in a first position (62) the first supply line section (36) is closed by the second, in particular freely movable end (68), of the cover flap (38), and the second supply line section (34) is released, and in a second position (64) the first supply line section (36) is released from the second, in particular freely movable end (68) of the cover flap (38) and the second supply line section (34) is closed.

8. Household dishwasher according to claim 7, **characterised in that** the first supply line section (36) and the second supply line section (34) form a Y-junction, and that the cover flap (38), in particular its first end (66), is attached, in particular hinged, in the region of the branch fork of the Y-junction.

9. Household dishwasher according to claim 8, **characterised in that** the first line section (36) and the second line section (34) of the Y-junction are arranged aligned at an acute angle relative to one another.

10. Household dishwasher according to at least one of the preceding claims, **characterised in that** in the region of its second, in particular freely moveable end (68), the cover flap (38) has a ferromagnetic element (84) or a permanent magnet (86) for generating a throwing force, in particular opening force or closing force, acting additionally on the cover flap (38), as a function of a magnetic field generated from outside of the valve apparatus (32).

11. Household dishwasher according to claim 10, **characterised in that** an actuator (40) arranged outside of a housing (52) of the valve apparatus (32) has a magnet (58) of any magnetic polarity facing the ferromagnetic element (84) or a magnet (58) of a different polarity facing the permanent magnet (86) in a first position of the actuator (40), in order to generate an additional holding force, in particular closing force, for holding the cover flap (38) in its second position (64).

12. Household dishwasher according to claim 11, **characterised in that** in its second position (64) the cover flap (38) closes a second line section (34) in a manner so as to seal washing liquid.

13. Household dishwasher according to claim 12, **characterised in that** an actuator (40) arranged outside of the housing (52) of the valve apparatus (32) has a magnet (58) of the same polarity facing the permanent magnet (86) in a second position of the actuator (40), in order to generate an additional electromagnetic throwing force to move the cover flap (38) out of its second position (64) so that a washing liquid pressure difference can be produced, which brings about a hydraulic throwing force in order to pivot the cover flap (38) into its first position (62).

14. Household dishwasher according to claim 13, **characterised in that** in its first position (62) the cover flap (38) closes a first line section (36) in a manner so as to seal washing liquid.

15. Household dishwasher according to at least one of claims 11 to 14, **characterised in that** the actuator (40) has a longitudinally adjustable slider (56) to be actuated by a drive (88).

16. Household dishwasher according to claim 15, **characterised in that** the drive (88) is a lifting magnet which can be activated by means of an electromagnetic coil.

17. Household dishwasher according to at least one of the preceding claims, **characterised in that** the valve apparatus (32) is integrated into the pump housing (50) of the circulating pump (30), in particular into the outlet area thereof, or the housing (52) of the valve apparatus (32) is attached to the pump housing (50) of the circulating pump (30), in particular into the outlet area thereof.

18. Household dishwasher according to at least one of the preceding claims, **characterised in that** the valve apparatus (38) is embodied as a hydraulically assisted water switch for the circulating pump (30).

19. Method for opening and closing one or more supply line sections (34, 36), through which washing liquid is conveyed to one or more washing liquid spray devices (18, 20) in the dishwasher cavity (12) of a household dishwasher (10) by means of a circulating pump (30), with the aid of a valve apparatus (32), in particular according to at least one of the preceding claims, wherein on account of a hydraulic throwing force accompanying a liquid pressure difference between a first position (62), in which the supply line section (36) is closed by the cover flap (38), and a second position (64), in which the supply line section (36) is released from the cover flap (38), a pivotally arranged cover flap (38) having a first end (66) and a second, in particular free end (68) is pivoted by the valve apparatus (32), **characterised in that** the first end (66) of the cover flap (38) is fastened with a clamp in the supply line section (36) between a section of the housing (52) of the valve apparatus (32) and a valve seat insert (72) inserted into the section of the housing (52).

20. Method according to claim 19, **characterised in that** the cover flap (38) of the valve apparatus which is attached in the region of the branch fork (89) of a Y-junction between a first supply line section (36) and a second supply line section (34) is pivoted to and fro between a first and a second position (62, 64) which largely seals washing liquid such that the first supply line section (36) and the second supply line section (34) are opened or closed alternately or intermittently for washing liquid in respect of a first washing liquid spray device (20) and a second washing liquid spray device (18) in each instance.

21. Method according to one of claims 19 or 20, **characterised in that** in order to, in particular intermittently, supply optionally at least one first washing liquid spray device (20) and optionally at least one second washing liquid spray device (18) in the washing container (12) for spraying a washing liquid conveyed through a valve apparatus (32) by a circulating pump (30), the following method step is carried out: generating an electromagnetic field outside of a housing (52) of the valve apparatus (32) in order to induce an opening force within the housing (52) of the valve apparatus (32), said opening force moving the cover flap (38) arranged pivotably within the housing (52) out of a second position (64), which in particular largely seals washing liquid, into a first position (62), which in particular largely seals washing liquid.

22. Method according to claim 21 having the following additional method step: increasing the circulating pump power for effecting a force generated by a washing liquid pressure difference onto the cover flap (38) in order to move the cover flap (38) out of its second position (64), which in particular largely seals washing liquid, into a first position (62), which in particular largely seals washing liquid.

23. Method according to one of claims 21 or 22, in which moving the cover flap (38) out of its second position (64), which in particular largely seals washing liquid, on a second supply line section (34), which leads to a second washing liquid spray device (18), is achieved by a repellent electromagnetic effect between the electromagnetic field produced outside of the housing (52) of the valve apparatus (32) and a permanent magnet (86) provided with the cover flap (38).

24. Method according to at least one of claims 19 to 23 with the following additional method step:
reducing the circulating pump power in order to reduce the force produced by a washing liquid pressure difference on the cover flap (38) in order to release the cover flap (38) from its first position (62), which in particular largely seals washing liquid, on a first supply line section (36) which leads to a first washing liquid spray device (20).

25. Method according to claim 24 with the following additional method step: generating an electromagnetic field outside of the housing (52) of the valve apparatus (32), in order to induce a closing force within the housing (52) of the valve apparatus (32), which moves the cover flap (38) arranged pivotably within the housing (52) into the second position (65), in particular in a manner which largely seals washing liquid.

26. Method according to claim 25, in which the movement of the cover flap (38) into its second position (64), which in particular largely seals washing liquid, on a second supply line section (34) of the second washing liquid spray device (18) is achieved by an attracting electromagnetic effect between the electromagnetic field produced outside of the housing (52) of the valve apparatus (32) and a permanent magnet (86) connected to the cover flap (38) or a ferromagnetic element (84).

27. Method according to at least one of claims 21 to 26, in which the respective electromagnetic field generated outside of the housing (52) of the valve apparatus (32) is generated by a magnet (58) which is to be adjusted on-site in order to control the effect on the permanent magnet (86) or the ferromagnetic element (84) connected to the cover flap (38) inside of the housing (52) of the valve apparatus (32).

## Revendications

1. Lave-vaisselle à usage domestique comprenant une cuve de lavage (12), un ou plusieurs dispositifs de pulvérisation de liquide de lavage (18, 20) disposés dans la cuve de lavage (12), ainsi qu'une pompe de recyclage (30) destinée à transporter le liquide de lavage, et comprenant un dispositif de vanne (32) destiné à ouvrir et fermer une section de conduite d'alimentation (34, 36) menant vers un dispositif de pulvérisation de liquide de lavage (18, 20) ou en provenance de plusieurs, notamment deux, sections de conduite d'alimentation (34, 36) allant vers les plusieurs, notamment deux, dispositifs de pulvérisation de liquide de lavage (18, 20), le dispositif de vanne (32) présentant un clapet de fermeture (38) qui, en raison d'une force de réglage hydraulique en association avec une pression différentielle du liquide de lavage, est disposé de manière pivotante en va et vient entre une première position (62), dans laquelle la section de conduite d'alimentation (36) est fermée par le clapet de fermeture (38), et une deuxième position (64) dans laquelle la section de conduite d'alimentation (36) est libérée par le clapet de fermeture, et le clapet de fermeture (38) pivotant présentant une première extrémité (66) qui est logée par rapport à la section de conduite d'alimentation (34, 36), et une deuxième extrémité (68), notamment libre, qui est pivotante en va et vient entre la première position (62) et la deuxième position (64), **caractérisé en ce que** la première extrémité (66) du clapet de fermeture (38) dans la section de conduite d'alimentation (36) est fixée par serrage entre une section du boîtier (52) du dispositif de vanne (32) et un insert de siège de vanne (72) inséré dans la section du boîtier (52).

2. Lave-vaisselle à usage domestique selon la revendication 1, **caractérisé en ce que** la deuxième extrémité (68) du clapet de fermeture (38) est réalisée en forme de languette ou de lamelle.

3. Lave-vaisselle à usage domestique selon la revendication 1 ou 2, **caractérisé en ce que** la deuxième extrémité (68) du clapet de fermeture (38) est logée, sur la première extrémité (66) de ce dernier, de manière pivotante par l'intermédiaire d'une articulation rotative, notamment d'une charnière.

4. Lave-vaisselle à usage domestique selon au moins l'une quelconque des revendications 1 avec 3, **caractérisé en ce que** la première extrémité (66) est reliée à la deuxième extrémité (68), notamment libre, du clapet de fermeture (38) par l'intermédiaire d'une section d'amincissement de matière (80) du clapet de fermeture (38) en forme de film charnière.

5. Lave-vaisselle à usage domestique selon au moins l'une quelconque des revendications 1 avec 4, **caractérisé en ce qu'**une pièce moulée de forme stable, notamment rigide, notamment une pièce en matière plastique, est sélectionnée pour la première extrémité (66) et/ou la deuxième extrémité (68) du clapet de fermeture (38).

6. Lave-vaisselle à usage domestique selon au moins l'une quelconque des revendications 1 avec 5, **caractérisé en ce que** le clapet de fermeture (38), notamment la première extrémité (66) et/ou la deuxième extrémité (68) de ce dernier, est fabriqué à partir d'une matière flexible, notamment d'une matière plastique.

7. Lave-vaisselle à usage domestique selon au moins l'une quelconque des revendications précédentes, **caractérisé en ce que** le clapet de fermeture (38) est fixé, avec sa première extrémité (66), dans une partie située entre une première section de conduite d'alimentation (36) menant vers un premier dispositif de pulvérisation de liquide de lavage (20), et une deuxième section de conduite d'alimentation (34) menant vers un deuxième dispositif de pulvérisation de liquide de lavage (18), et **en ce que** dans une première position (62), la première section de conduite d'alimentation (36) est fermée par la deuxième extrémité (68), notamment librement déplaçable, du clapet de fermeture (38), et la deuxième section de conduite d'alimentation (34) est libérée, et **en ce que** dans une deuxième position (64), la première section de conduite d'alimentation (36) est libérée par la deuxième extrémité (68), notamment librement déplaçable, du clapet de fermeture (38), et la deuxième section de conduite d'alimentation (34) est fermée.

8. Lave-vaisselle à usage domestique selon la revendication 7, **caractérisé en ce que** la première section de conduite d'alimentation (36) et la deuxième section de conduite d'alimentation (34) forment un branchement en forme de Y, et **en ce que** le clapet de fermeture (38), notamment sa première extrémité (66) est placée, notamment articulée, dans la partie en fourche du branchement en forme de Y.

9. Lave-vaisselle à usage domestique selon la revendication 8, **caractérisé en ce que** la première section de conduite d'alimentation (36) et la deuxième section de conduite d'alimentation (34) du branchement en forme de Y sont disposées en étant orientées dans un angle aigu l'une par rapport à l'autre.

10. Lave-vaisselle à usage domestique selon au moins l'une quelconque des revendications précédentes, **caractérisé en ce que** le clapet de fermeture (38) présente dans la partie de sa deuxième extrémité (68), notamment librement déplaçable, un élément ferromagnétique (84) ou un aimant permanent (86) afin de générer une force de réglage agissant en plus sur le clapet de fermeture (38), notamment une force d'ouverture ou une force de fermeture, en fonction d'un champ magnétique généré à l'extérieur du dispositif de vanne (32).

11. Lave-vaisselle à usage domestique selon la revendication 10, **caractérisé en ce qu'**un organe de réglage (40) disposé à l'extérieur d'un boîtier (52) du dispositif de vanne (32) présente un aimant (58) de polarité magnétique quelconque, tourné vers l'élément ferromagnétique (84), ou un aimant (58) de polarité différente, tourné vers l'aimant permanent (86) dans une première position de l'organe de réglage (40), afin de générer une force de maintien supplémentaire, notamment une force de fermeture, pour maintenir le clapet de fermeture (38) dans sa deuxième position (64).

12. Lave-vaisselle à usage domestique selon la revendication 11, **caractérisé en ce que** le clapet de fermeture (38), dans sa deuxième position (64), obture une deuxième section de conduite d'alimentation (34) de manière étanche au liquide de lavage.

13. Lave-vaisselle à usage domestique selon la revendication 12, **caractérisé en ce qu'**un organe de réglage (40) disposé à l'extérieur du boîtier (52) du dispositif de vanne (32) présente un aimant (58) de polarité magnétique identique, tourné vers l'aimant permanent (86) dans une deuxième position de l'organe de réglage (40), afin de générer une force de réglage électromagnétique supplémentaire destinée à déplacer le clapet de fermeture (38) hors de sa deuxième position (64) de manière à ce qu'une pression différentielle du liquide de lavage puisse être produite, laquelle provoque une force de réglage hydraulique pour pivoter le clapet de fermeture (38) dans sa première position (62).

14. Lave-vaisselle à usage domestique selon la revendication 13, **caractérisé en ce que** le clapet de fermeture (38), dans sa première position (62), obture une première section de conduite d'alimentation (36) de manière étanche au liquide de lavage.

15. Lave-vaisselle à usage domestique selon au moins l'une quelconque des revendications 11 avec 14, **caractérisé en ce que** l'organe de réglage (40) présente un verrou (56) réglable en longueur, à actionner par un entraînement (88).

16. Lave-vaisselle à usage domestique selon la revendication 15, **caractérisé en ce que** l'entraînement (88) est un aimant de levage activable au moyen d'une bobine électromagnétique.

17. Lave-vaisselle à usage domestique selon au moins l'une quelconque des revendications précédentes, **caractérisé en ce que** le dispositif de vanne (32) est intégré dans le boîtier de pompe (50) de la pompe de recyclage (30), notamment dans la partie de sortie de celle-ci, ou **en ce que** le boîtier (52) du dispositif de vanne (32) est bridé sur le boîtier de pompe (50) de la pompe de recyclage (30), notamment dans la partie de sortie de celle-ci.

18. Lave-vaisselle à usage domestique selon au moins l'une quelconque des revendications précédentes, **caractérisé en ce que** le dispositif de vanne (38) est réalisé en tant que distributeur d'eau, à support hydraulique, pour la pompe de recyclage (30).

19. Procédé d'ouverture et de fermeture d'une ou de plusieurs sections de conduite d'alimentation (34, 36) à travers laquelle ou lesquelles du liquide de lavage est transporté au moyen d'une pompe de recyclage (30) vers un ou plusieurs dispositifs de pulvérisation de liquide de lavage (18, 20) situés dans la cuve de lavage (12) d'un lave-vaisselle (10) à usage domestique, à l'aide d'un dispositif de vanne (32), notamment selon au moins l'une quelconque des revendications précédentes, un clapet de fermeture (38) présentant une première extrémité (66) et une deuxième extrémité (68), notamment libre, étant pivoté par le dispositif de vanne (32), en raison d'une force de réglage hydraulique en association avec une pression différentielle du liquide de lavage, entre une première position (62), dans laquelle la section de conduite d'alimentation (36) est fermée par le clapet de fermeture (38), et une deuxième position (64) dans laquelle la section de conduite d'alimentation (36) est libérée par le clapet de fermeture (38), **caractérisé en ce que** la première extrémité (66) du clapet de fermeture (38) dans la section de conduite d'alimentation (36) est fixée par serrage entre une section du boîtier (52) du dispositif de vanne (32) et un insert de siège de vanne (72) inséré dans la section du boîtier (52).

20. Procédé selon la revendication 19, **caractérisé en ce que** le clapet de fermeture (38) du dispositif de vanne, placé dans la partie de la fourche (89) d'un branchement en forme de Y entre la première section de conduite d'alimentation (36) et une deuxième section de conduite d'alimentation (34), est pivoté en va et vient entre une première et une deuxième positions (62, 64), notamment de manière largement étanche au liquide de lavage, de manière à ce que la première section de conduite d'alimentation (36) menant vers un premier dispositif de pulvérisation de liquide de lavage (20) et que la deuxième section de conduite d'alimentation (34) menant vers un deuxième dispositif de pulvérisation de liquide de lavage (18) soient mutuellement ou de manière intermittente ouvertes ou fermées pour le liquide de lavage.

21. Procédé selon l'une quelconque des revendications 19 ou 20, **caractérisé en ce que** pour l'alimentation, notamment intermittente, sélectivement au moins d'un premier dispositif de pulvérisation de liquide de lavage (20) et optionnellement au moins d'un deuxième dispositif de pulvérisation de liquide de lavage (18) situés dans la cuve de lavage (12) dans le but de pulvériser un liquide de lavage transporté à travers un dispositif de vanne (32) par une pompe de recyclage (30), l'étape de procédé suivante est réalisée :
génération d'un champ électromagnétique à l'extérieur d'un boîtier (52) du dispositif de vanne (32) afin de provoquer une force d'ouverture à l'intérieur du boîtier (52) du dispositif de vanne (32), laquelle déplace le clapet de fermeture (38), disposé de manière pivotante à l'intérieur du boîtier (52), d'une deuxième position (64), notamment largement étanche au liquide de lavage, en une première position (62), notamment largement étanche au liquide de lavage.

22. Procédé selon la revendication 21, comprenant l'étape de procédé supplémentaire suivante :
augmentation de la performance de la pompe de recyclage afin de provoquer sur le clapet de fermeture (38) une force générée par pression différentielle du liquide de lavage, destinée à déplacer le clapet de fermeture (38) de sa deuxième position (64), notamment largement étanche au liquide de lavage, en une première position (62), notamment largement étanche au liquide.

23. Procédé selon l'une quelconque des revendications 21 ou 22, dans lequel le déplacement du clapet de fermeture (38) de sa deuxième position (64), notamment largement étanche au liquide de lavage, sur une deuxième section de conduite d'alimentation (34), laquelle mène vers un deuxième dispositif de pulvérisation de liquide de lavage (18), est obtenu par un effet électromagnétique de répulsion entre le champ électromagnétique généré à l'extérieur du boîtier (52) du dispositif de vanne (32) et un aimant permanent (86) muni du clapet de fermeture (38).

24. Procédé selon au moins l'une quelconque des revendications 19 avec 23, comprenant l'étape de procédé supplémentaire suivante :
réduction de la performance de la pompe de recyclage afin de diminuer la force générée par une pression différentielle du liquide de lavage sur le clapet de fermeture (38) dans le but de libérer le clapet de fermeture (38) de sa première position (62), notamment largement étanche au liquide de lavage, sur une première section de conduite d'alimentation (36) qui mène vers un premier dispositif de pulvérisation de liquide de lavage (20).

25. Procédé selon la revendication 24, comprenant l'étape de procédé supplémentaire suivante ;
génération d'un champ électromagnétique à l'extérieur du boîtier (52) du dispositif de vanne (32) afin de provoquer une force de fermeture à l'intérieur du boîtier (52) du dispositif de vanne (32), laquelle déplace le clapet de fermeture (38), disposé de manière pivotante à l'intérieur du boîtier (52), dans la deuxième position (64), notamment largement étanche au liquide de lavage.

26. Procédé selon la revendication 25, dans lequel le déplacement du clapet de fermeture (38) dans sa deuxième position (64), notamment largement étanche au liquide de lavage, sur une deuxième section de conduite d'alimentation (34) du deuxième dispositif de pulvérisation de liquide de lavage (18), est obtenu par un effet électromagnétique d'attraction entre le champ électromagnétique généré à l'extérieur du boîtier (52) du dispositif de vanne (32) et un aimant permanent (86) relié au clapet de fermeture (38) ou un élément ferromagnétique (84).

27. Procédé selon au moins l'une quelconque des revendications 21 avec 26, dans lequel le champ électromagnétique respectivement généré à l'extérieur du boîtier (52) du dispositif de vanne (32) est généré par un aimant (58), lequel, pour la commande de l'effet sur l'aimant permanent (86) relié au clapet de fermeture (38) à l'intérieur du boîtier (52) du dispositif de vanne (32) ou sur l'élément ferromagnétique (84), est à déplacer localement.
